(19) Europäisches Patentamt
European Patent Office
Office européen des brevets

(11) **EP 2 357 460 A1**

(12) **EUROPEAN PATENT APPLICATION**
published in accordance with Art. 153(4) EPC

(43) Date of publication:
**17.08.2011 Bulletin 2011/33**

(51) Int Cl.:
***G01L 1/14*** *(2006.01)* ***G01L 5/16*** *(2006.01)*

(21) Application number: **09827382.4**

(22) Date of filing: **20.11.2009**

(86) International application number:
**PCT/JP2009/006288**

(87) International publication number:
**WO 2010/058601 (27.05.2010 Gazette 2010/21)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.11.2008 JP 2008298801**
**19.02.2009 JP 2009037118**

(71) Applicants:
• **Takano Co., Ltd.**
**Kamiina-gun**
**Nagano 399-4301 (JP)**
• **Takahashi, Makoto**
**Hokkaido 002-8072 (JP)**

(72) Inventors:
• **TAKAHASHI, Makoto**
**Sapporo-shi**
**Hokkaido 002-8072 (JP)**
• **KASHIWABARA, Takeshi**
**Kamiina-gun**
**Nagano 399-4301 (JP)**

(74) Representative: **Henkel, Feiler & Hänzel**
**Patentanwälte**
**Maximiliansplatz 21**
**80333 München (DE)**

(54) **CAPACITIVE DYNAMIC QUANTITY SENSOR ELEMENT AND DYNAMIC QUANTITY SENSOR**

(57)     In order to give a simple structure that can be made smaller and with which a sensor element itself can deform flexibly and can be used for a variety of applications without restricting usage, the element is provided with an electrically insulating and mechanically elastic base material (2) having at least a pair of opposing surfaces, four electrodes (4) which are disposed on one surface of the pair of surfaces of said base material (2), and four electrodes (4) which are disposed on the other surface of the pair of surfaces at positions corresponding to the four electrodes (4) on the aforementioned one surface. The capacitance between electrodes (4) is detected for each combination of two electrodes selected from the electrodes (4).

Fig.1

EP 2 357 460 A1

**Description**

TECHNICAL FIELD

The present invention relates to a capacitive dynamic quantity sensor element and a dynamic quantity sensor using the same. More particularly, the present invention relates to an element that is suitable for a sensor to detect a three-dimensional 1 dynamic quantity, on the basis of the change of capacitance between electrodes, and a dynamic quantity sensor using the same.

BACKGROUND ART

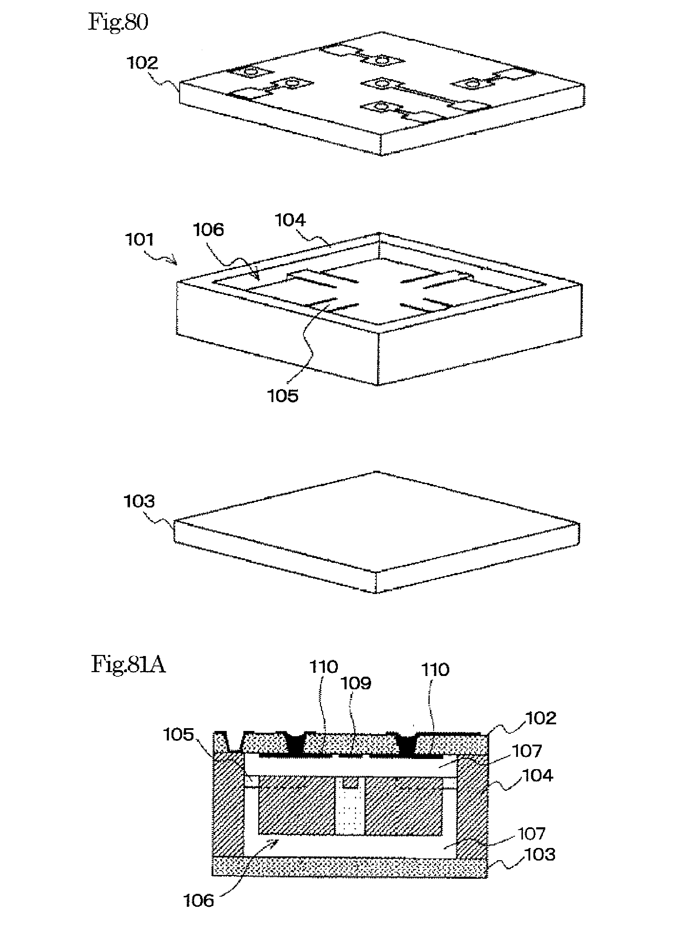

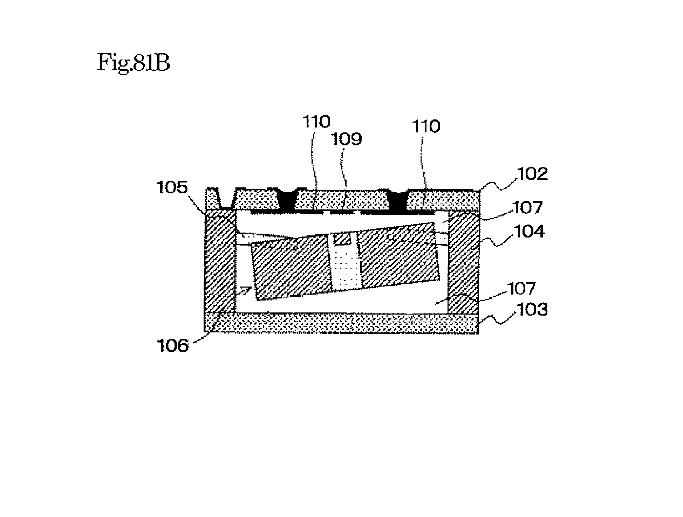

A capacitive dynamic quantity sensor detects a change in capacitance between two parallel electrodes that generally face each other and measures a dynamic quantity. As a dynamic quantity sensor element according to the related art, a dynamic quantity sensor element that is shown in FIGS. 80 and 81 is known. This dynamic quantity sensor element includes a weight support structure 101 that includes a frame 104 and a weight 106 corresponding to peripheral walls to form a hollow portion 107 and a flexible portion 105 to support the weight 106 to be positioned in the hollow portion 107, an upper glass substrate 102 and a lower glass substrate 103 that interpose the weight support structure 101 in a vertical direction, and a driving electrode 109 and a fixing electrode 110 that face the weight 106 and are disposed on the upper glass substrate 102, and detects the posture change of the weight 106, on the basis of the change of the capacitance between the fixing electrode 110 and the weight 106.

PRIOR ART DOCUMENT

PATENT DOCUMENT

Patent Document 1: Japanese Patent Applicatoin Laid-Open (JP-A) No. 2007-192587

SUMMARY OF THE INVENTION

PROBLEMS TO BE SOLVED BY THE INVENTION

However, the dynamic quantity sensor element that is disclosed in Patent Document 1 needs a container having high rigidity to form the hollow portion 107 corresponding to a space to store the weight 106 and the electrodes 109 and 110 and allow the inclination of the weight 106, and has a robust casing that includes the frame 104 and the glass substrates 102 and 103. For this reason, the dynamic quantity sensor element cannot be used in a state where the dynamic quantity sensor element contacts a flexible curve surface such as a surface of a human body. That is, it is hard to say to be high versatility, because usage is restricted.
In the dynamic quantity sensor element that is disclosed in Patent Document 1, since the electrodes are disposed on the hard upper glass substrate 102, an arrangement state of the electrodes is maintained at a planar state. In addition, since the posture change of the weight 106 supported by the flexible portions 105 formed as two axes to be orthogonal to each other is detected, the dynamic quantity such as the deviation in a horizontal direction, the reduction in a vertical direction, the rotational displacement of vertical axis rotation, and the complicated twisting due to the total force of forces of individual axial directions or the stress corresponding to the displacement cannot be detected.
In the dynamic quantity sensor element that is disclosed in Patent Document 1, as shown in FIG. 81B, in addition to the weight 106, the upper glass substrate 102 and the lower glass substrate 103, the hollow portion 107 that corresponds to the space to allow the inclination of the weight 106 needs to be provided around the weight 106, so as to detect the posture change of the weight 106. For this reason, the thickness of the sensor element cannot be decreased to be smaller than the thickness needed to configure the above-described structure.
In the dynamic quantity sensor element that is disclosed in Patent Document 1, the casing that includes the frame 104 of the peripheral wall to form the hollow portion 107 to allow the inclination of the weight 106, the upper glass substrate 102, and the lower glass substrate 103 is configured and the weight 106 is supported to float in the hollow portion 107 in the casing. For this reason, the structure of the sensor element is very complicated, a manufacturing process is complicated, and a manufacturing cost increases. Further, since the structure is very complicated, it is difficult to suppress changes in individual quality in the manufacturing process and it may be difficult to secure detection precision of the sensor element.
Accordingly, it is an object of the present invention to provide a capacitive dynamic quantity sensor element that has a simple structure and a small size, can be flexibly deformed and can be used in a state where the sensor element contacts a flexible curve surface such as a surface of a human body, and can be used for various applications without restricting usage. Further, it is another object of the present invention to provide a capacitive dynamic quantity sensor element that can detect various kinds of dynamic quantities. Further, it is another object of the present invention to provide a dynamic quantity sensor that can be used for various applications and calculate various kinds of dynamic quantities.

MEANS FOR SOLVING THE PROBLEMS

In order to achieve the above objects, the inventors found that change of capacitance used to determine a dynamic quantity such as a displacement amount can be detected between electrodes not facing each other, through various studies. A capacitive dynamic quantity sensor element of claim 1 includes a base material that has an electric insulating property and dynamic elasticity and has at least one pair of facing surfaces; at least one electrode that is disposed on one surface of the pair of surfaces of the base material; and at least one electrode that is disposed on the other surface of the pair of surfaces. The capacitive dynamic quantity sensor element detects capacitance between the electrodes for each combination of the two electrodes selected one by one from the electrode disposed on one surface and the electrode disposed on the other surface.

Further, a capacitive dynamic quantity sensor element according to the present invention includes a base material that has an electric insulating property and dynamic elasticity and has at least one pair of facing surfaces; four electrodes that are disposed on one surface of the pair of surfaces of the base material; and four electrodes that are disposed on the other surface of the pair of surfaces at positions facing the four electrodes of one surface. The capacitive dynamic quantity sensor element detects capacitance between the electrodes for each combination of the two electrodes selected one by one from the four electrodes disposed on one surface and the four electrodes disposed on the other surface.

Therefore, according to this capacitive dynamic quantity sensor element, since the electrodes are disposed on the base material having the dynamic elasticity, a casing having high rigidity to form a movable space of the electrodes to generate the change of the capacitance does not need to be separately provided. According to this capacitive dynamic quantity sensor element, an elastic characteristic of the base material where the electrodes are disposed can be adjusted by selecting the material of the base material.

According to a capacitive dynamic quantity sensor element according to a preferred aspect, 16 capacitive dynamic quantity sensor elements are configured for 16 combinations of the two electrodes selected one by one from the four electrodes disposed on one surface of the pair of surfaces of the base material and the four electrodes disposed on the other surface, and capacitance changes of 16 directions are detected. Specifically, each of the four electrodes that are disposed on one surface is combined with each of the four electrodes that are disposed on the other surface, and a total of 16 combinations are configured. Therefore, different from the sensor element according to the related art in which the displacement is detected for each of axial directions of three axes of X, Y, and Z, the capacitive dynamic quantity sensor element uses information of the 16 directions in calculation and can detect the various dynamic quantities such as the deviation in the horizontal direction, the reduction in the vertical direction, the rotational displacement of the vertical axis rotation, the deviation and the twisting with respect to the vertical axis due to the inclination, and the stress corresponding to the displacement.

Further, in the capacitive dynamic quantity sensor element of claim 1 or 2, the electrodes are preferably configured by a flexible print circuit board.

Further, in the capacitive dynamic quantity sensor element of claim 1 or 2, an entire surface of the capacitive dynamic quantity sensor element is preferably sealed by a protective film.

A dynamic quantity sensor of claim 5 includes an operation device. The operation device includes a means for receiving capacitance value data measured and output by a capacitive dynamic quantity sensor element which includes a base material that has an electric insulating property and dynamic elasticity and has at least one pair of facing surfaces, at least one electrode that is disposed on one surface of the pair of surfaces of the base material, and at least one electrode that is disposed on the other surface of the pair of surfaces, and detects capacitance between the electrodes for each combination of the two electrodes selected one by one from the electrode disposed on one surface and the electrode disposed on the other surface; a means for calculating the position of the electrode disposed on the other surface with respect to the electrode disposed on one surface using the capacitance value data; a means for calculating the middle position of the electrode disposed on the other surface, on the basis of the position of the electrode disposed on the other surface; a means for calculating a rotation angle of the other surface with respect to one surface, on the basis of the position of the electrode disposed on the other surface; a means for calculating the stress of the base material using the middle position; and a means for calculating the twisting moment of the base material using the rotation angle.

Further, a dynamic quantity sensor according to the present invention preferably includes an operation device. The operation device includes a means for receiving capacitance value data measured and output by a capacitive dynamic quantity sensor element which includes a base material that has an electric insulating property and dynamic elasticity and has at least one pair of facing surfaces, four electrodes that are disposed on one surface of the pair of surfaces of the base material, and four electrodes that are disposed on the other surface of the pair of surfaces, and detects capacitance between the electrodes for each combination of the two electrodes selected one by one from the four electrodes disposed on one surface and the four electrodes disposed on the other surface; a means for calculating the positions of the four electrodes disposed on the other surface of the pair of surfaces with respect to the four electrodes disposed on one surface of the pair of surfaces using the capacitance value data; a means for calculating the middle position of the four electrodes, on the basis of the positions of the four electrodes; a means for calculating a rotation angle of the other surface with respect to one surface, on the basis of the positions of the four electrodes; a means for calculating the stress of the base material using the middle position of the four electrodes; and a means for calculating the twisting moment of the base material using the rotation angle.

Therefore, according to this dynamic quantity sensor, since the dynamic quantity sensor can use a capacitive dynamic quantity sensor element that has a simple structure and a small size and can be used in a state where the capacitive dynamic quantity sensor element contacts a flexible curve surface, the dynamic quantity sensor can be used for various applications without restricting usage.

Further, according to a dynamic quantity sensor according to a preferred aspect, capacitance value data of the 16 directions for each combination of the two electrodes selected one by one from the four electrodes disposed on one surface of the pair of surfaces of the base material and the four electrodes disposed on the other surface is input. Therefore, differently from the sensor element according to the related art in which the displacement is measured for each of axial directions of at most three axes of X, Y, and Z, the dynamic quantity sensor uses information of the 16 direction in calculation and can measure the various dynamic quantities such as the deviation in the horizontal direction, the reduction in the vertical direction, the rotational displacement of the vertical axis rotation, the deviation and the twisting with respect to the vertical axis due to the inclination, and the stress corresponding to the displacement.

EFFECTS OF THE INVENTION

According to the capacitive dynamic quantity sensor element of the present invention, a simple structure where the electrodes are bonded directly to the base material is used, Therefore, the sensor element can be formed to have the simple structure and a thin and small size. Further, since a casing or a frame having high rigidity to form a movable space of the electrodes to generate the change of the capacitance is not needed, the sensor can be configured to be flexible. Therefore, the capacitive dynamic quantity sensor element can be used for various applications without arrangement place or space restriction, and versatility can be improved. Further, changes in individual quality in the manufacturing process can be suppressed and detection precision of the sensor element can be improved.

According to the capacitive dynamic quantity sensor element of the present invention, an elastic characteristic of the base material where the electrodes are disposed can be adjusted by selecting the material of the base material. Therefore, detection precision of the minute dynamic quantity can be improved in the capacitive dynamic quantity sensor element that shows an elastic characteristic according to the measurement objects.

Further, according to the capacitive dynamic quantity sensor element of claim 2, if a correlation of the change of the capacitance between the electrodes for each combination of the two electrodes selected one by one from the four electrodes disposed on one surface of the pair of surfaces of the base material and the four electrodes disposed on the other surface and the displacement amount of each axial direction or axis rotation is previously calculated, the various dynamic quantities such as the deviation in the horizontal direction, the reduction in the vertical direction, the rotational displacement of the vertical axis rotation, the deviation and the twisting with respect to the vertical axis due to the inclination, and the stress corresponding to the displacement can be measured. Therefore, useful information can be provided to contribute to explaining the phenomenon that cannot be explained until now, because the dynamic quantity therein cannot be measured.

According to the capacitive dynamic quantity sensor element of claim 3, since the capacitive dynamic quantity sensor element can be easily manufactured and the time and effort can be reduced, versatility can be improved and a manufacturing cost can be reduced. Further, changes in individual quality in the manufacturing process can be further suppressed and detection precision of the sensor element can be further improved.

According to the capacitive dynamic quantity sensor element of claim 4, since peeling of the electrodes from the base material and damaging of the base material or the electrodes can be prevented, durability of the sensor element can be improved. Further, since the deterioration of the material of the base material can be prevented, durability of the sensor element can be improved, the change of the physical characteristic can be suppressed, and detection precision can be maintained.

Further, according to the dynamic quantity sensor element of claim 5, the reduction of at least a vertical direction can be calculated by disposing one electrode on each surface of the pair of facing surfaces, and the reduction in the vertical direction and the various dynamic quantities such as the deviation in the horizontal direction, the rotational displacement of the vertical axis rotation, the deviation and the twisting with respect to the vertical axis due to the inclination, and the stress corresponding to the displacement can be measured according a method of disposing the electrodes on each surface of the pair of facing surfaces. Therefore, useful information can be provided to contribute to explaining the phenomenon that cannot be explained until now, because the dynamic quantity therein cannot be measured.

According to the dynamic quantity sensor of claim 6, the various dynamic quantities such as the deviation in the horizontal direction, the reduction in the vertical direction, the rotational displacement of the vertical axis rotation, the deviation and the twisting with respect to the vertical axis due to the inclination, and the stress corresponding to the displacement can be calculated by calculation using the information of the 16 directions. Therefore, useful information can be provided to contribute to explaining the phenomenon that cannot be explained until now, because the dynamic quantity therein cannot be measured.

BRIEF DESCRIPTION OF THE DRAWINGS

FIG. 1 is a cross-sectional view illustrating an example of a capacitive dynamic quantity sensor element according to an embodiment of the present invention.

FIG. 2 is a plan view illustrating an example of a capacitive dynamic quantity sensor element according to an embodiment of the present invention.

FIG. 3 is a diagram illustrating an example of a dynamic quantity sensor according to an embodiment of the present invention and illustrating the functional configuration of a circuit to which a signal is input from a sensor element.

FIG. 4 is a diagram illustrating an example of a dynamic quantity sensor according to an embodiment of the present invention and illustrating a circuit configuration to which a signal is input from a sensor element.

FIG. 5 is a diagram illustrating the functional configuration of an operation device of a circuit according to this embodiment.

FIG. 6 is a flowchart illustrating a process sequence of the operation device of FIG. 5.

FIG. 7 is a diagram illustrating a relationship between arrangement of electrodes and three axes to describe a process of the operation device of FIG. 5.

FIG. 8A is a diagram illustrating a method of calibrating an actual measurement value according to this embodiment.

FIG. 8B is a diagram illustrating a method of calibrating an actual measurement value according to this embodiment.

FIG. 9A is a diagram illustrating a method of calibrating an actual measurement value according to this embodiment.

FIG. 9B is a diagram illustrating a method of calibrating an actual measurement value according to this embodiment.

PIG. 10 is a diagram illustrating a state where a top surface of a sensor element according to this embodiment is displaced with respect to a bottom surface thereof.

FIG. 11A is a diagram illustrating setting of electrodes of a capacitive dynamic quantity sensor element according to a first example and is a plan view illustrating an electrode of a top surface of the sensor element.

FIG. 11B is a diagram illustrating setting of three axes with respect to the electrodes of the capacitive dynamic quantity sensor element according to the first example and illustrating a relationship between arrangement of the electrodes of the capacitive dynamic quantity sensor element and the three axes.

FIG. 12 is a diagram illustrating a relationship between the displacement amount $\Delta d$ of when the displacement of a compression direction according to the first example is applied and the change amount $\Delta C$ of the capacitance between electrodes A-A'.

FIG. 13 is a diagram illustrating a relationship between the displacement amount $\Delta d$ and the change amount $\Delta C$ of the capacitance between electrodes A-B'.

FIG. 14 is a diagram illustrating a relationship between the displacement amount $\Delta d$ and the change amount $\Delta C$ of the capacitance between electrodes A-C'.

FIG. 15 is a diagram illustrating a relationship between the displacement amount $\Delta d$ and the change amount $\Delta C$ of the capacitance between electrodes A-D'.

FIG. 16 is a diagram illustrating a relationship between the displacement amount $\Delta d$ and the change amount $\Delta C$ of the capacitance between electrodes B-A'.

FIG. 17 is a diagram illustrating a relationship between the displacement amount $\Delta d$ and the change amount $\Delta C$ of the capacitance between electrodes B-B'.

FIG. 18 is a diagram illustrating a relationship between the displacement amount $\Delta d$ and the change amount $\Delta C$ of the capacitance between electrodes B-C'.

FIG. 19 is a diagram illustrating a relationship between the displacement amount $\Delta d$ and the change amount $\Delta C$ of the capacitance between electrodes B-D'.

FIG. 20 is a diagram illustrating a relationship between the displacement amount $\Delta d$ and the change amount $\Delta C$ of the capacitance between electrodes C-A'.

FIG. 21 is a diagram illustrating a relationship between the displacement amount Δd and the change amount ΔC of the capacitance between electrodes C-B'.

FIG. 22 is a diagram illustrating a relationship between the displacement amount Δd and the change amount ΔC of the capacitance between electrodes C-C'.

FIG. 23 is a diagram illustrating a relationship between the displacement amount Δd and the change amount ΔC of the capacitance between electrodes C-D'.

FIG. 24 is a diagram illustrating a relationship between the displacement amount Δd and the change amount ΔC of the capacitance between electrodes D-A'.

FIG. 25 is a diagram illustrating a relationship between the displacement amount Δd and the change amount ΔC of the capacitance between electrodes D-B'.

FIG. 26 is a diagram illustrating a relationship between the displacement amount Δd and the change amount ΔC of the capacitance between electrodes D-C'.

FIG. 27 is a diagram illustrating a relationship between the displacement amount Δd and the change amount ΔC of the capacitance between electrodes D-D'.

FIG. 28 is a diagram illustrating a relationship between the displacement amount Δd of when the displacement of a deviation direction in an X-axis direction according to the first example is applied and the change amount ΔC of the capacitance between electrodes A-A'.

FIG. 29 is a diagram illustrating a relationship between the displacement amount Δd and the change amount ΔC of the capacitance between electrodes A-B'.

FIG. 30 is a diagram illustrating a relationship between the displacement amount Δd and the change amount ΔC of the capacitance between electrodes A-C'.

FIG. 31 is a diagram illustrating a relationship between the displacement amount Δd and the change amount ΔC of the capacitance between electrodes A-D'.

FIG. 32 is a diagram illustrating a relationship between the displacement amount Δd and the change amount ΔC of the capacitance between electrodes B-A'.

FIG. 33 is a diagram illustrating a relationship between the displacement amount Δd and the change amount ΔC of the capacitance between electrodes B-B'.

FIG. 34 is a diagram illustrating a relationship between the displacement amount Δd and the change amount ΔC of the capacitance between electrodes B-C'.

FIG. 35 is a diagram illustrating a relationship between the displacement amount Δd and the change amount ΔC of the capacitance between electrodes B-D'.

FIG. 36 is a diagram illustrating a relationship between the displacement amount Δd and the change amount ΔC of the capacitance between electrodes C-A'.

FIG. 37 is a diagram illustrating a relationship between the displacement amount Δd and the change amount ΔC of the capacitance between electrodes C-B'.

FIG. 38 is a diagram illustrating a relationship between the displacement amount Δd and the change amount ΔC of the capacitance between electrodes C-C'.

FIG. 39 is a diagram illustrating a relationship between the displacement amount Δd and the change amount ΔC of the capacitance between electrodes C-D'.

FIG. 40 is a diagram illustrating a relationship between the displacement amount Δd and the change amount ΔC of the capacitance between electrodes B-A'.

FIG. 41 is a diagram illustrating a relationship between the displacement amount Δd and the change amount ΔC of the capacitance between electrodes D-B'.

FIG. 42 is a diagram illustrating a relationship between the displacement amount Δd and the change amount ΔC of the capacitance between electrodes D-C'.

FIG. 43 is a diagram illustrating a relationship between the displacement amount Δd and the change amount ΔC of the capacitance between electrodes D-D'.

FIG. 44 is a diagram illustrating a relationship between the displacement amount Δd of when the displacement of a deviation direction in a Y-axis direction according to the first example is applied and the change amount ΔC of the capacitance between electrodes A-A'.

FIG. 45 is a diagram illustrating a relationship between the displacement amount Δd and the change amount ΔC of the capacitance between electrodes A-B'.

FIG. 46 is a diagram illustrating a relationship between the displacement amount Δd and the change amount ΔC of the capacitance between electrodes A-C'.

FIG. 47 is a diagram illustrating a relationship between the displacement amount Δd and the change amount ΔC of the capacitance between electrodes A-B'.

FIG. 48 is a diagram illustrating a relationship between the displacement amount Δd and the change amount ΔC of the capacitance between electrodes B-A'.

FIG. 49 is a diagram illustrating a relationship between the displacement amount Δd and the change amount ΔC of the capacitance between electrodes B-B'.

FIG. 50 is a diagram illustrating a relationship between the displacement amount Δd and the change amount ΔC of the capacitance between electrodes B-C'.

FIG. 51 is a diagram illustrating a relationship between the displacement amount Δd and the change amount ΔC of the capacitance between electrodes B-D'.

FIG. 52 is a diagram illustrating a relationship between the displacement amount Δd and the change amount ΔC of the capacitance between electrodes C-A'.

FIG. 53 is a diagram illustrating a relationship between the displacement amount Δd and the change amount ΔC of the capacitance between electrodes C-B'.

FIG. 54 is a diagram illustrating a relationship between the displacement amount Δd and the change amount ΔC of the capacitance between electrodes C-C'.

FIG. 55 is a diagram illustrating a relationship between the displacement amount Δd and the change amount ΔC of the capacitance between electrodes C-D'.

FIG. 56 is a diagram illustrating a relationship between the displacement amount Δd and the change amount ΔC of the capacitance between electrodes D-A'.

FIG. 57 is a diagram illustrating a relationship between the displacement amount Δd and the change amount ΔC of the capacitance between electrodes D-B'.

FIG. 58 is a diagram illustrating a relationship between the displacement amount Δd and the change amount ΔC of the capacitance between electrodes D-C'.

FIG. 59 is a diagram illustrating a relationship between the displacement amount Δd and the change amount ΔC of the capacitance between electrodes D-D'.

FIG. 60 is a diagram illustrating a relationship between a rotation angle Δθ of when the rotational displacement of Z-axis rotation according to the first example is applied and the change amount AC of the capacitance between electrodes A-A' .

FIG. 61 is a diagram illustrating a relationship between the rotation angle Δθ and the change amount ΔC of the capacitance between electrodes A-B'.

FIG. 62 is a diagram illustrating a relationship between the rotation angle Δθ and the change amount ΔC of the capacitance between electrodes A-C'.

FIG. 63 is a diagram illustrating a relationship between the rotation angle Δθ and the change amount ΔC of the capacitance between electrodes A-D'.

FIG. 64 is a diagram illustrating a relationship between the rotation angle Δθ and the change amount ΔC of the capacitance between electrodes B-A'.

FIG. 65 is a diagram illustrating a relationship between the rotation angle Δθ and the change amount ΔC of the capacitance between electrodes B-B'.

FIG. 66 is a diagram illustrating a relationship between the rotation angle Δθ and the change amount ΔC of the capacitance between electrodes B-C'.

FIG. 67 is a diagram illustrating a relationship between the rotation angle Δθ and the change amount ΔC of the capacitance between electrodes B-D' .

FIG. 68 is a diagram illustrating a relationship between the rotation angle Δθ and the change amount ΔC of the capacitance between electrodes C-A'.

FIG. 69 is a diagram illustrating a relationship between the rotation angle Δθ and the change amount ΔC of the capacitance between electrodes C-B'.

F1G. 70 is a diagram illustrating a relationship between the rotation angle Δθ and the change amount ΔC of the capacitance between electrodes C-C'.

FIG. 71 is a diagram illustrating a relationship between the rotation angle Δθ and the change amount ΔC of the capacitance between electrodes C-D'.

FIG. 72 is a diagram illustrating a relationship between the rotation angle Δθ and the change amount AC of the capacitance between electrodes D-A'.

FIG. 73 is a diagram illustrating a relationship between the rotation angle Δθ and the change amount ΔC of the capacitance between electrodes D-B'.

FIG. 74 is a diagram illustrating a relationship between the rotation angle Δθ and the change amount ΔC of the capacitance between electrodes D-C'.

FIG. 75 is a diagram illustrating a relationship between the rotation angle Δθ and the change amount ΔC of the capacitance between electrodes D-D'.

FIG. 76A is a diagram illustrating overlapping of lines when the top surface and the bottom surface of the sensor element according to the first example are relatively rotationally displaced and illustrating a pattern where the lines of the electrodes overlap each other when the sensor element rotates in a positive direction and the lines of the electrodes are apart from each other when the sensor element rotates in a negative direction.

FIG. 76B is a diagram illustrating overlapping of lines when the top surface and the bottom surface of the sensor element according to the first example are relatively rotationally displaced and illustrating a pattern where the lines of the electrodes are apart from each other when the sensor element rotates in a positive direction and the lines of the electrodes overlap each other when the sensor element rotates in a negative direction.

FIG. 77A is a diagram illustrating the change of the capacitance between the electrodes of the sensor element according to the first example and illustrating the change of the capacitance between the electrodes C-A' and the electrodes D-B'.

77B is a diagram illustrating the change of the capacitance between the electrodes of the sensor element according to the first example and illustrating the change of the capacitance between the electrodes A-C' and the electrodes B-D'.

FIG. 78A is a diagram illustrating the change of the capacitance between the electrodes of the sensor element according to the first example.

FIG. 78B is a diagram illustrating the change of the capacitance between the electrodes of the sensor element according to the first example.

FIG. 78C is a diagram illustrating the change of the capacitance between the electrodes of the sensor element according to the first example.

FIG. 78D is a diagram illustrating the change of the capacitance between the electrodes of the sensor element according to the first example.

FIG. 78E is a diagram illustrating the change of the capacitance between the electrodes of the sensor element according to the first example.

FIG. 79A is a diagram illustrating a comparison result of the displacement amount calculated using calibrated capacitance value data according to a second example and the actual displacement amount applied to the sensor element and illustrating the case where the displacement of compression in a Z-axis direction is applied.

FIG. 79B is a diagram illustrating a comparison result of the displacement amount calculated using the calibrated capacitance value data according to the second example and the actual displacement amount applied to the sensor element and illustrating the case where the displacement of the deviation in an X-axis direction is applied.

FIG. 79C is a diagram illustrating a comparison result of the displacement amount calculated using the calibrated capacitance value data according to the second example and the actual displacement amount applied to the sensor element and the case where the displacement of deviation in a Y-axis direction is applied.

FIG. 79D is a diagram illustrating a comparison result of the displacement amount calculated using the calibrated capacitance value data according to the second example and the actual displacement amount applied to the sensor element and the case where the rotational displacement of Z-axis rotation is applied.

FIG. 80 is an exploded perspective view illustrating a capacitive dynamic quantity sensor according to the related art.

FIG. 81A is a cross-sectional view illustrating the capacitive dynamic quantity sensor according to the related art and illustrating a state where the posture of a weight is not changed.

FIG. 81B is a cross-sectional view illustrating the capacitive dynamic quantity sensor according to the related art and illustrating a state where the posture of the weight is changed.

## MODES FOR CARRYING OUT THE INVENTION

Hereinafter, the configuration of the present invention will be described in detail on the basis of embodiments shown in the drawings.

A capacitive dynamic quantity sensor element according to the present invention includes a base material that has an electric insulating property and dynamic elasticity and has at least a pair of facing surfaces, at least one electrode that is disposed on one surface of the pair of surfaces of the base material, and at least one electrode that is disposed on the other surface of the pair of surfaces, and detects capacitance between electrodes of each combination of two electrodes selected one by one from the electrode disposed on one surface and the electrode disposed on the other surface. A dynamic quantity sensor according to the present invention includes an operation device that has a means for receiving capacitance value data measured and output by the capacitive dynamic quantity sensor element, a means for calculating the position of the electrode disposed on the other surface with respect to the electrode disposed on one surface using the capacitance value data, a means for calculating the middle position of the electrode disposed on the other surface, on the basis of the position of the electrode disposed on the other surface, a means for calculating a rotation angle of the other surface with respect to one surface, on the basis of the position of the electrode disposed on the other surface, a means for calculating stress of the base material using the middle position, and a means for calculating the twisting moment of the base material using the rotation angle.

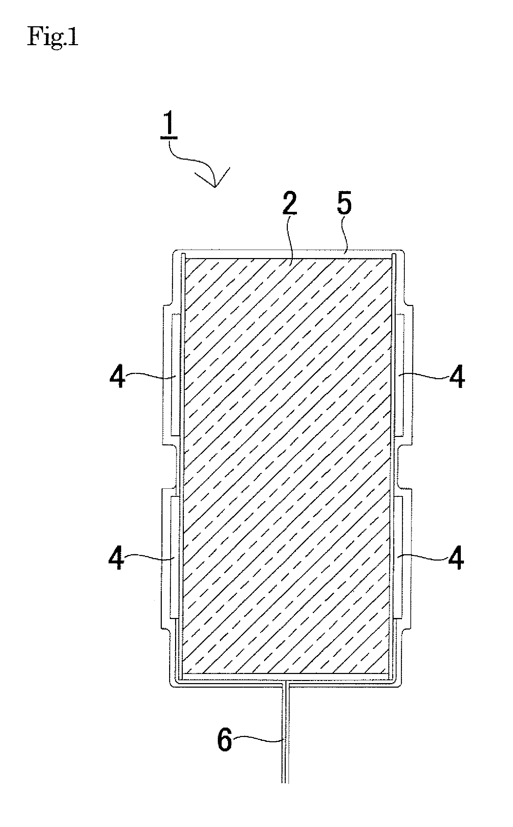

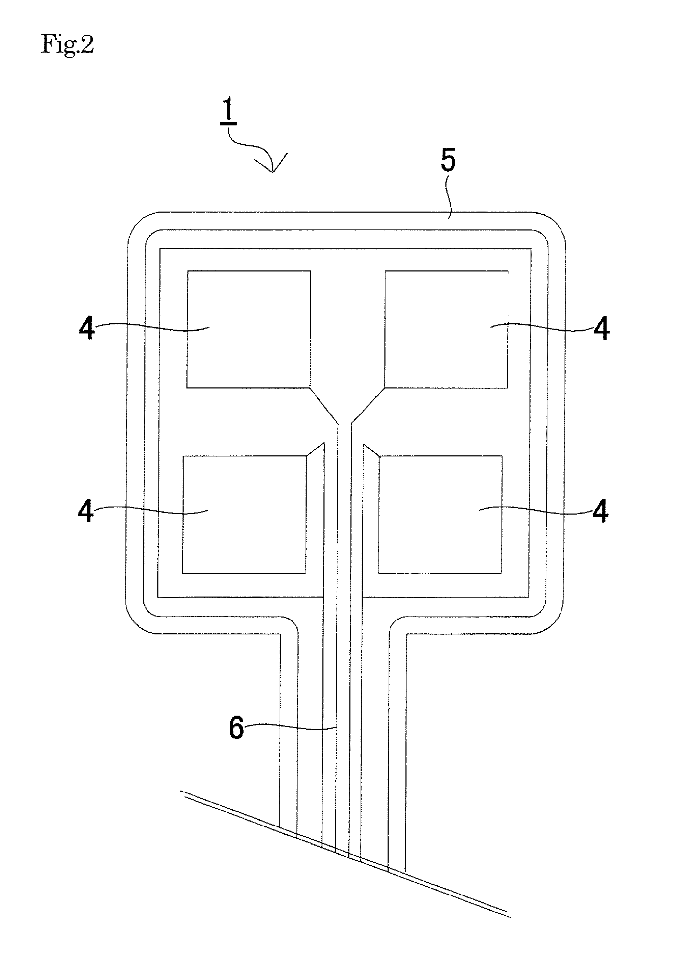

FIGS. 1 to 10 show an example of a capacitive dynamic quantity sensor element and a dynamic quantity sensor according to an embodiment of the present invention. A capacitive dynamic quantity sensor element 1 according to this embodiment includes a base material 2 that has an electric insulating property and dynamic elasticity and has at least a pair of facing surfaces, four electrodes 4 that are disposed on one surface (hereinafter, referred to as top surface) of the pair of surfaces of the base material 2, and four electrodes 4 that are disposed on the other surface (hereinafter, referred to as bottom surface) of the pair of surfaces to face the four electrodes 4 on the top surface respectively, and outputs capacitance between the electrodes 4 of each combination of two electrodes 4 selected one by one from the four electrodes 4 disposed on the top surface and the four electrodes 4 disposed on the bottom surface.

The base material 2 is interposed between the electrodes 4 disposed on the top surface and the electrodes 4 disposed on the bottom surface as an electric insulator, deforms according to the applied dynamic quantity, and supports the electrodes 4 while enabling the change of capacitance between the electrodes 4. That is, the base material 2 is formed of a material having an electric insulating property and dynamic elasticity. Specifically, the base material 2 is formed of gel. As the gel, for example, silicone gel is preferably used. However, other gel such as alumina gel can be used. In this embodiment, the base material 2 is formed of a rectangular solid.

The material that constitutes the base material 2 is not limited to the specific material, and any material that has an electric insulating property and dynamic elasticity may be used as the material of the base material 2. By adjusting elastic modulus of the base material 2 on the basis of magnitude of the dynamic quantity such as magnitude of force or magnitude of acceleration measured by the capacitive dynamic quantity sensor element 1, specifically, changing mixed materials or a mixture ratio at the time of manufacturing the base material or selecting material of the base material, both the minute dynamic quantity and the dynamic quantity having the considerable magnitude can be accurately detected and measured.

Further, a dimension of the base material 2 is not limited to a specific dimension and is adjusted to an appropriate dimension according to a measurement object, an arrangement place, etc. By adjusting the dimension of the base material 2 on the basis of magnitude of the dynamic quantity such as magnitude of force or magnitude of displacement measured by the capacitive dynamic quantity sensor element 1, the dynamic quantity can be accurately grasped and measured, regardless of the magnitude of the dynamic quantity.

In order to measure the dynamic quantity applied to the base material 2 on the basis of the change of the capacitance between the electrodes 4 according to deformation of the base material 2, the elastic modulus and thickness and relative permittivity at the time of non-load are grasped with respect to the base material 2.

The four electrodes 4 are disposed on the top surface of the pair of facing surfaces of the base material 2 forming the rectangular solid such that the center of each electrode is at a vertex of a rectangle, and the four electrodes 4 are disposed on the bottom surface of the pair of facing surfaces to face each electrode of the top surface. Thereby, the total of eight electrodes 4 are disposed such that each central position forms a rectangular solid and combinations of the four pairs of facing electrodes 4 are formed. Each electrode 4 is electrically independent. To each electrode 4, a circuit 6 that transmits an electric signal from each electrode 4 is connected. Further, each electrode 4 may be configured using a flexible print circuit (FPC).

In addition, each electrode 4 configures a pair of capacitive sensor elements between each electrode and the electrode of the facing surface that becomes the electrically independent counter electrode and outputs a capacitance value. That is, in this embodiment, each of the four electrodes 4 that are disposed on the top surface of the base material 2 forming the rectangular solid and each of the four electrodes 4 that are disposed on the bottom surface are combined and a total of sixteen pairs of capacitive sensor elements are configured. In other words, the capacitive dynamic quantity sensor element 1 according to this embodiment forms an aggregate of the sixteen pairs of capacitive sensor elements by the above-described configuration.

When the dynamic quantity is applied to the capacitive dynamic quantity sensor element 1, the base material 2 is deformed, a relative positional relationship in a three-dimensional space between the sixteen pairs of electrodes or the partial pairs of electrodes 4 is changed according to a kind or an aspect of the deformation, and the capacitance is changed. For this reason, the capacitance that is output by the sixteen pairs of capacitive sensor elements is individually changed according to the kind of the deformation of the base material 2.

Therefore, by specifying the kind or aspect of the deformation of the base material 2 using capacitance value data obtained from the sixteen pairs of capacitive sensor elements, specifically, on the basis of a change pattern of the capacitance of all or part of the sixteen pairs of electrodes, the various dynamic quantities applied to active surfaces to be measurement objects can be measured. Specifically, the various dynamic quantities such as the stress in a vertical direction and the stress in a horizontal direction, shear stress, bending moment, and twisting moment can be measured.

In this embodiment, since the capacitance between the sixteen pairs of electrodes is detected by the eight electrodes 4 and is output, the magnitude of each electrode 4 and intervals between the electrodes are adjusted in a range where the capacitance can be detected.

In the capacitive dynamic quantity sensor element 1 according to this embodiment, in order to improve durability, the entire surface is covered and sealed by a protective film 5. In this embodiment, the base material 2 and the electrodes 4 are packed by an elastomer resin film, preferably, an elastomer resin film having an insulating property. Thereby, the electrodes 4 can be prevented from being damaged or peeled from the base material 2 or the base material 2 can be prevented from being deteriorated or damaged.

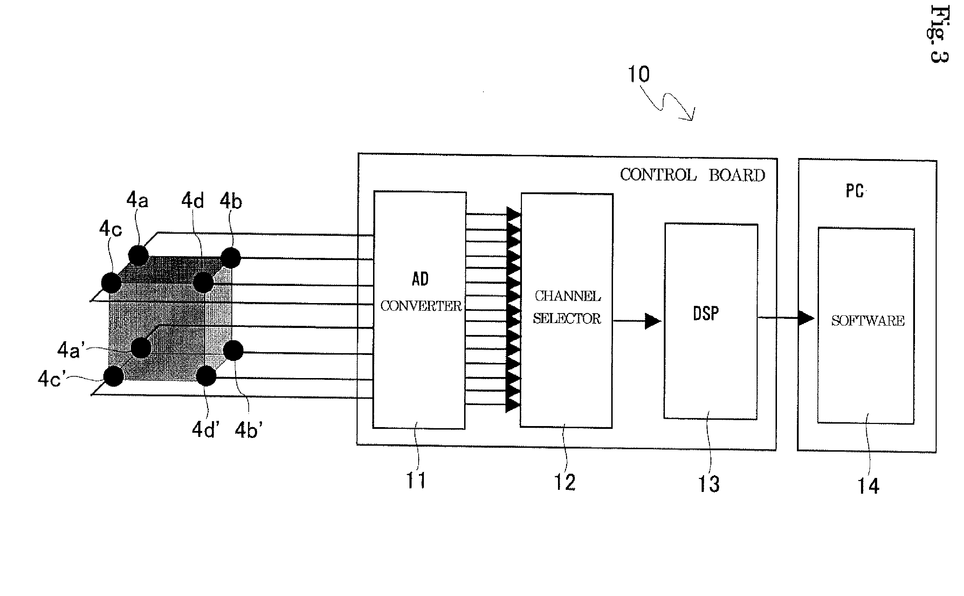

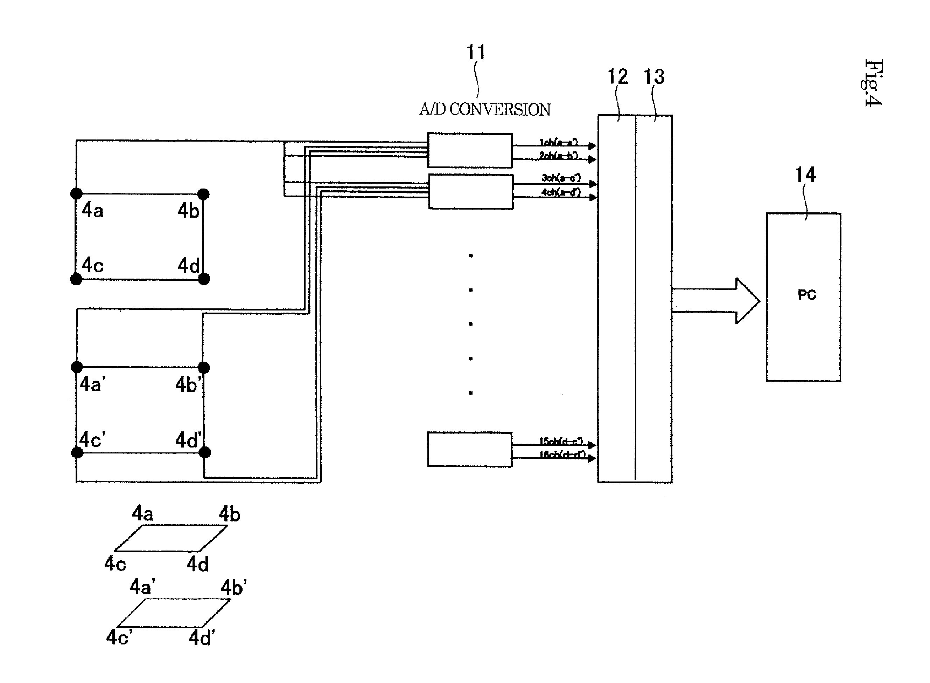

An electric signal that indicates the magnitude of the capacitance between the electrodes 4 output from the capacitive dynamic quantity sensor element 1 according to the present invention is input to a circuit 10. As shown in FIG. 3, the circuit 10 according to this embodiment has an AD converter 11 that receives an output signal from each electrode 4, a channel selector 12 that receives an output from the AD converter 11, a digital signal processor 13 that receives an output from the channel selector 12, and an operation device 14 that receives a signal processed by the digital signal processor 13. In the following description, as shown in FIGS. 3 and 4, the four electrodes 4 that are disposed on one surface of the base material 2 are represented as electrodes 4a, 4b, 4c, and 4d and the four electrodes 4 that are disposed on the facing surface of the base material 2 are represented as electrodes 4a', 4b', 4c', and 4d'.

The AD converter 11 converts an analog amount output from each electrode 4 into a digital amount. In this embodiment, the AD converter 11 has a channel for each combination of the sixteen pairs of electrodes. For example, the AD converter 11 has a total of sixteen channels that are a channel to process the difference of the electrodes 4a and 4a', a channel to process the difference of the electrodes 4a and 4b', ..., and a channel to process the difference of the electrodes 4d and 4d'.

The channel selector 12 has at least channels corresponding to the sixteen channels output from the AD converter 11 as input-side channels, and selects one of the channels, switches the circuit, and sequentially outputs an input from the AD converter 11 to the digital signal processor 13.

The operation device 14 receives the signals that are output from the channel selector 12 and are processed by the digital signal processor 13, and calculates the various dynamic quantities applied to the capacitive dynamic quantity sensor element 1 (hereinafter, also simply referred to as sensor element 1), on the basis of the signals. Specifically, the operation device 14 specifies a kind of the deformation of the base material 2, on the basis of a change pattern of the capacitance difference between the sixteen pairs of electrodes, and calculates the magnitude of the displacement of each electrode 4 and the magnitude of the applied load, on the basis of the magnitude of the capacitance or the elastic modulus of the base material 2.

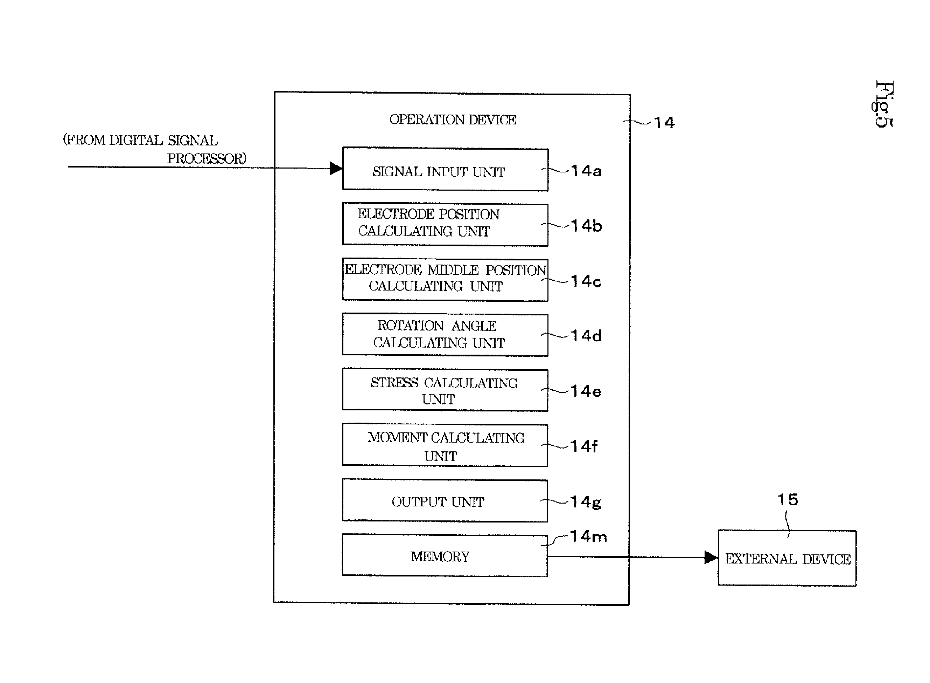

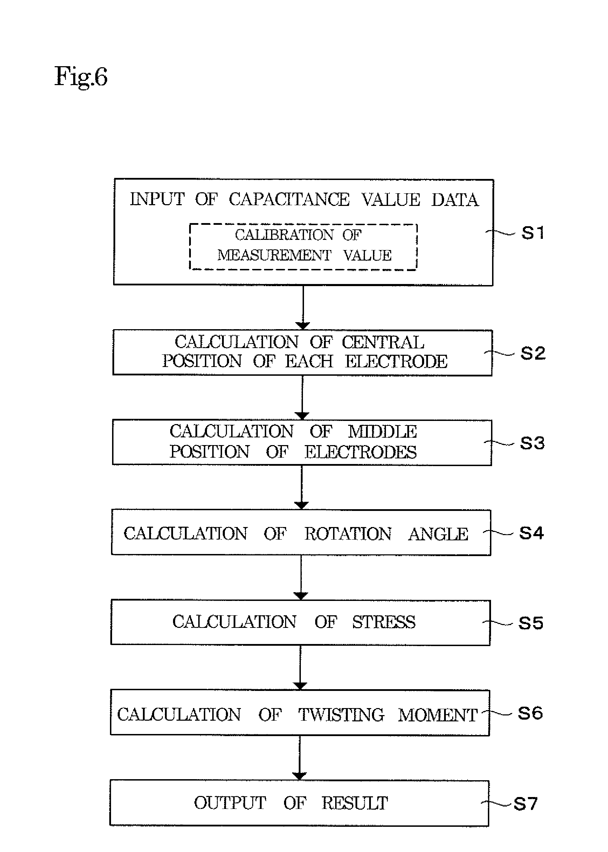

As shown in FIG. 5, the operation device 14 according to this embodiment has a signal input unit 14a that functions as a means for receiving capacitance value data corresponding to the signal processed by the digital signal processor 13, an electrode position calculating unit 14b that functions as a means for calculating the central position of each of the four electrodes disposed on the bottom surface when the middle position of the four electrodes disposed on the top surface of the pair of surfaces of the sensor element 1 is used as an original point, using the received capacitance value data, an electrode middle position calculating unit 14c that functions as a means for calculating the middle position of the four electrodes disposed on the bottom surface, on the basis of the calculated central position of each electrode, a rotation angle calculating unit 14d that functions as a means for calculating a rotation angle of the bottom surface with respect to the top surface of the pair of surfaces of the sensor element 1, on the basis of the calculated central position of each electrode, a stress calculating unit 14e that functions as a means for calculating the stress of the sensor element 1 using the calculated middle position of the four electrodes disposed on the bottom surface, a moment calculating unit 14f that functions as a means for calculating the twisting moment of the sensor element 1 using the calculated rotation angle, an output unit 14g that functions as a means for outputting data such as the calculated stress or twisting moment to an external device 15, and a memory 14m that becomes a memory space corresponding to a work area of when the operation device 14 executes various control and operations. The memory 14m is, for example, RAM (Random Access Memory). The operation device 14 calculates the various dynamic quantities using the capacitance value data between the sixteen pairs of electrodes, according to a flowchart shown in FIG. 6.

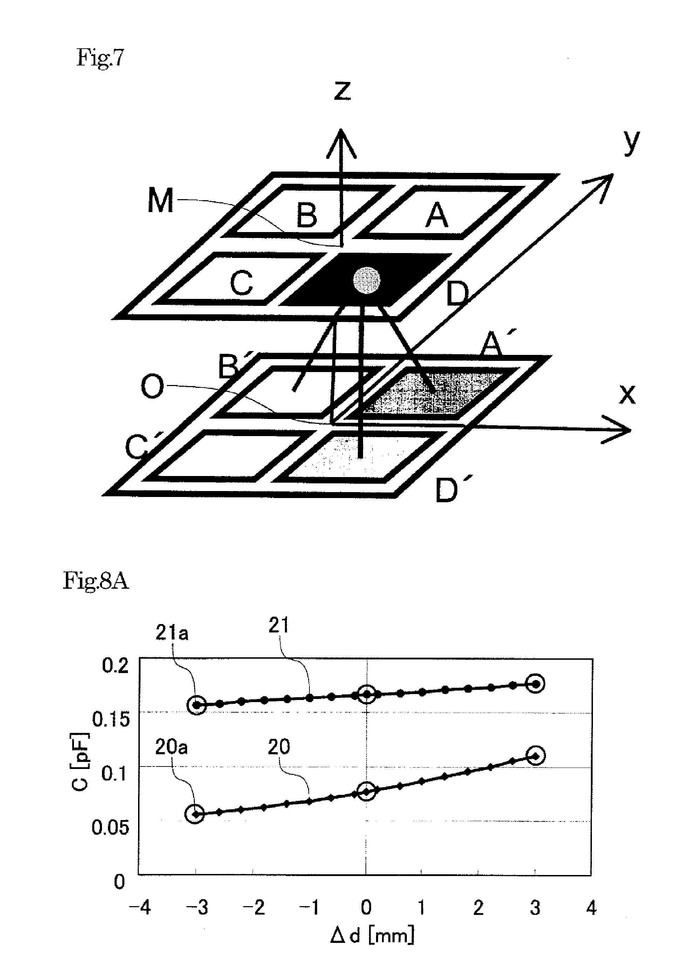

FIG. 7 shows arrangement of the electrodes on each surface of the pair of surfaces of the sensor element 1, symbols (A, B, C, D, A', B', C', D') to identify the electrodes, and setting of three-dimensional axes to represent the positions used in the following description. In the following description, the surface on which the electrodes A, B, C, and D are disposed is referred to as a top surface and the surface on which the electrodes A', B', C', and D' are disposed is referred to as a bottom surface. In addition, the middle position of the four electrodes A', B', C' and D' of the bottom surface is set as an original point O, a horizontal axis is set as an X axis and a Y axis, and a vertical axis is set as a Z axis. An arrow direction is set as a positive direction of each axis. The position coordinates that are described herein have a scale of the length and absolute values of the position coordinates are synonymous with the length and the distance.

First, the signal input unit 14a receives the capacitance value data from the digital signal processor 13 (51).

Specifically, the signal input unit 14a receives the capacitance value data between the total of sixteen pairs of electrodes that are formed by sequentially combining one of the electrodes A, B, C, and D disposed on the top surface and one of the electrodes A', B', C', and D' disposed on the bottom surface. The signal input unit 14a associates the received capacitance value data with the electrode combinations which measured it and stores the association result in the memory 14m.

When the sensor element is displaced by the predetermined amount at the time of using the sensor element, the capacitance between the electrodes is actually measured, and an actual measurement value and a logical value are compared and verified. Then, when the difference is generated between the actual measurement value and the logical value, the measured capacitance value may be calibrated and used in the following process.

Specifically, as shown in FIG. 8A, the capacitance value is calibrated such that an actual measurement value 21 of the capacitance C between the electrodes for each displacement amount Δd actually measured while the sensor element is displaced is matched with a logical value 20 of the capacitance C corresponding to the displacement amount Δd calculated on the basis of a design value or a physical characteristic of the sensor element.

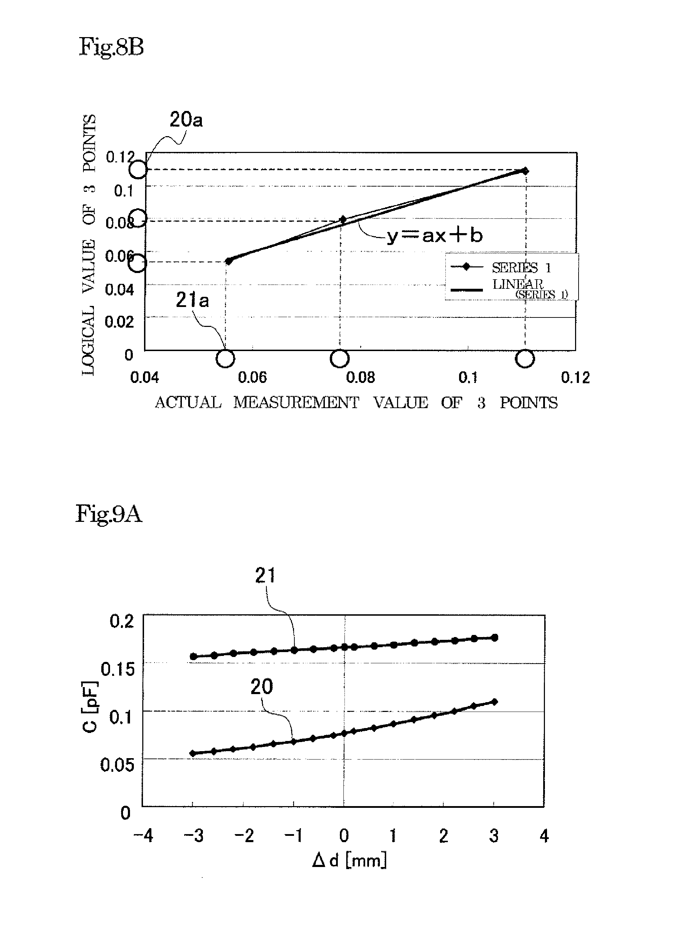

Inclination a and an intercept b of an approximate straight line are determined when the plural actual measurement values are selected and the difference of the actual measurement values and the logical values corresponding to the actual measurement values is minimized so as to be linear approximation (refer to FIG. 8B). The inclination a and the intercept b of the approximate straight line are used as inclination a and an intercept b of an equation to calibrate the measurement value of the capacitance input to the signal receiving unit 14a (hereinafter, referred to as a calibration equation). That is, as the calibration equation, the following equation 1 is used.

$$(\text{Equation 1}) \quad C_c = aC_m + b$$

In this case, $C_c$ indicates the capacitance after the calibration, $C_m$ indicates a measurement value of the capacitance, a indicates a coefficient that shows the inclination of the approximate straight line and the inclination of the calibration equation, and b indicates a coefficient that shows the intercept of the approximate straight line and the intercept of the calibration equation.

In an example that is shown in FIG. 8, the calibration equation is estimated by selecting the three actual measurement values 21a (shown by a symbol o in the drawings) and calculating the approximate straight line using the three actual measurement values 21a and the three logical values 20a (shown by a symbol o in the drawings) corresponding to the three actual measurement values. However, the number of combinations of the logical values and the actual measurement values that are used in estimating the calibration equation is not limited to three, and may be two or more. The displacement amounts Δd may be divided into the displacement amount having a positive value and the displacement amount having a negative value and the calibration equation may be estimated.

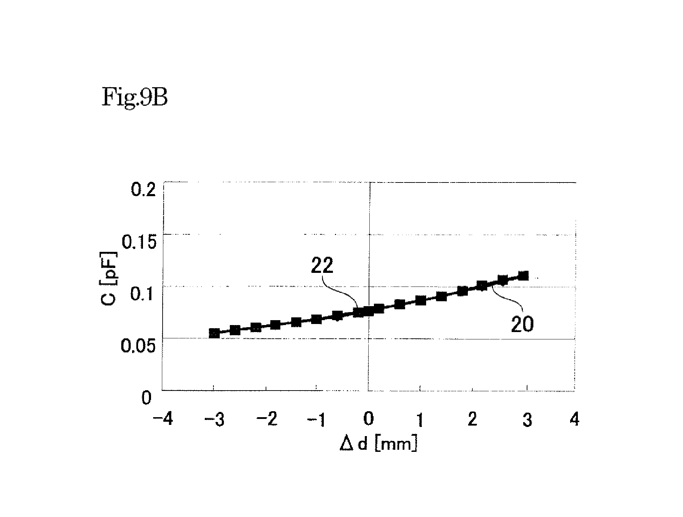

An example of the case where the measurement value is calibrated by applying the calibration equation is shown in FIG. 9. FIG. 9A shows a situation where the magnitudes of the logical values 20 and the actual measurement value 21 of the capacitance and the inclinations of the transition are different from each other, when the predetermined displacement is applied. If the calibration equation represented by the equation 1 is calculated from the relationship of the logical values 20 and the actual measurement values 21 and the calibration equation is applied to the actual measurement value, calibration values 22 of the measurement that are matched with the logical values 20 are calculated (refer to FIG. 9B).

The calibration of the measurement value using the calibration equation is considered as follows. That is, the actual measurement value of the capacitance becomes a value that is larger than the logical value in most of cases. This is due to enlargement of an effective area by an area of the line 6 of the sensor element 1 or an influence of the parasitic capacity. That is, as the result of a relationship of an equation 2, the capacitance is observed as an actual measurement value.

$$(\text{Equation 2}) \quad C_m = AC_R + p$$

In this case, $C_m$ indicates a measurement value of the capacitance, $C_R$ indicates a logical value of the capacitance, A indicates a coefficient that is related to factor affecting a measurement value of the capacitance such as an area of a line portion of the sensor element, and p indicates a constant that is related to the parasitic capacity.

In addition, it is effective to transform the equation into an equation 3 to minimize the influence applied to the observed capacitance value to obtain a value similar to the logical value and calibrate the measurement value using an equation having the inclination a corresponding to a coefficient 1/A of the equation 3 and the intercept b corresponding to a constant - p/A.

$$(\text{Equation 3})$$

$$C_R = \frac{1}{A} \cdot C_m - \frac{p}{A}$$

In this invention, on the basis of the above result, the actually measured capacitance value may be calibrated using the equation 1 and may be used in the following process.

Next, the electrode position calculating unit 14b calculates the central position of each electrode of the top surface using the capacitance value data between the electrodes input in the process of step S1 (S2).

In this case, an example of the case where the central position of the electrode D of the top surface is calculated is described. First, in each electrode and coordinate axes shown in FIG. 7, the coordinates of the central position of the electrode A' in a state where the load is not applied to the sensor element 1 (hereinafter, referred to as an initial state) are set as (x coordinate, y coordinate, z coordinates ($\alpha$, $\alpha$, 0). In this case, the coordinates of the central position of the electrode B' in the initial state become (-$\alpha$, $\alpha$, 0) and the coordinates of the central position of the electrode D' become ($\alpha$, -$\alpha$, 0). In this case, $\alpha$ is known as a design value of the sensor element 1.

In addition, from the initial state, the top surface of the sensor element 1 is compressed in a z-axis direction or is deviated in an x-axis direction or a y-axis direction with respect to the bottom surface, the sensor element 1 is deformed, and the coordinates of the central position of the electrode D of the top surface are displaced to ($x_D$, $y_D$, $z_D$).

At this time, the distances $d_{DA'}$, $d_{DB'}$, and $d_{DD'}$ between the electrode D of the top surface and the electrodes A', B', and D' of the bottom surface are represented by equations 4a to 4c, on the basis of a relationship of the coordinates of the central position of each electrode of the initial state and the coordinates of the central position of each electrode after the displacement.

$$\text{(Equation 4a)} \quad (x_D - \alpha)^2 + (y_D - \alpha)^2 + z_D^2 = d_{DA'}^2$$

$$\text{(Equation 4b)} \quad (x_D + \alpha)^2 + (y_D - \alpha)^2 + z_D^2 = d_{DB'}^2$$

$$\text{(Equation 4c)} \quad (x_D - \alpha)^2 + (y_D + \alpha)^2 + z_D^2 = d_{DD'}^2$$

Meanwhile, a relationship of an equation 5 is generally realized between the distance d between the electrodes and the capacitance C.

$$\text{(Equation 5)}$$

$$C = \varepsilon_0 \varepsilon_r \frac{S}{d}$$

In this case, C indicates the capacitance [pF] between the electrodes of the top surface and the electrodes of the bottom surface, $\varepsilon_0$ indicates the permittivity [$C^2 / N \cdot m^2$] of the vacuum, $\varepsilon_r$, indicates the relative permittivity of the base material of the sensor element, S indicates an area [$m^2$] of the electrode, and d indicates the distance [m] between the electrodes of the top surface and the electrodes of the bottom surface.

In this case, in regards to the variables of the equation 5, the permittivity $\varepsilon_0$ of the vacuum is known as a general physical constant, the relative permittivity $\varepsilon_r$ of the base material and the area S of the electrode are known as design values of the sensor element, and the capacitance C is known as a measurement value.

Therefore, from the equation 5, the distance $d_{DA}$' between the electrode D of the top surface and the electrode A' of the bottom surface is calculated by an equation 6. Further, $C_{DA}$' indicates the capacitance between the electrode D of the top surface and the electrode A' of the bottom surface.

(Equation 6)

$$d_{DA'} = \varepsilon_0 \varepsilon_r \frac{S}{C_{DA'}}$$

On the basis of the above result, the electrode position calculating unit 14b reads the capacitance value data between the electrodes stored in the memory 14m in the process of S1 from the memory 14m and calculates the distance d between the electrodes using the equation 6. The permittivity $\varepsilon_0$ of the vacuum, the relative permittivity $\varepsilon_r$ of the base material 2 of the sensor element 1, and the value of the area S of the electrode are previously stored in the memory 14m.

In addition, the electrode position calculating unit 14b calculates $x_D$, $y_D$, and $z_D$ by substituting the distance d between the electrodes calculated by the equation 6 for the equations 4a to 4c and solving the equations 4a to 4c after the substitution as simultaneous equations where $x_D$, $y_D$, and $z_D$ are the unknowns. As described above, $\alpha$ is known as a design value of the sensor element 1. For example, a value of $\alpha$ is previously stored in the memory 14m. As a result, the coordinates ($x_D$, $y_D$, $z_D$) of the central position of the electrode D after the top surface is displaced with respect to the bottom surface are calculated.

Likewise, the electrode position calculating unit 14b calculates the coordinates ($x_A$, $y_A$, and $z_A$), ($x_B$, $y_B$, and $z_B$) , and ($x_c$, $y_c$, and $z_c$) of the central positions of the electrodes A, B, and C of the top surface after the displacement. The electrode position calculating unit 14b associates the calculated coordinates of the central positions of the individual electrodes of the top surface with the individual electrodes and stores the association result in the memory 14m.

Next, the electrode middle position calculating unit 14c calculates the middle position of the four electrodes of the top surface after the displacement, on the basis of the central position of each of the electrodes calculated in the process of S2 (S3).

Specifically, the electrode middle position calculating unit 14c reads the coordinates of the central position of each of the electrodes A, B, C, and D stored in the memory 14m in the process of S2 from the memory 14m and calculates the coordinates of the middle position M of the four electrodes A, B, C, and D of the top surface musing the coordinates of the central position of each electrode. In addition, the electrode middle position calculating unit 14c stores the calculated coordinates of the middle position M of the four electrodes A, B, C, and D of the top surface in the memory 14m.

Next, the rotation angle calculating unit 14d calculates a rotation angle of the top surface with respect to the bottom surface, on the basis of the central position of each electrode calculated in the process of S2 and the middle position M of the electrodes of the top surface calculated in the process of S3 (S4).

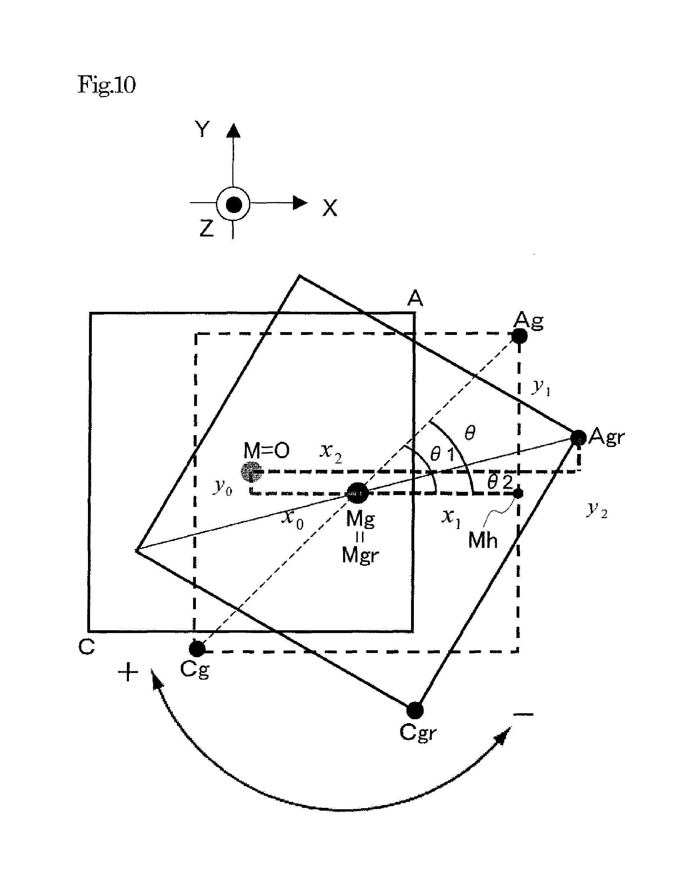

The rotation angle of when the top surface of the sensor element 1 is deviated in an x-axis direction and a y-axis direction with respect to the bottom surface and the sensor element 1 rotates in a z-axis direction can be calculated using the result of the processes of S2 and S3, as shown in FIG. 10.

In FIG. 10, an example of the case where the top surface of the sensor element 1 in the initial state is displaced with respect to the bottom surface, the central position of the electrode A in the initial state moves to a point Ag corresponding to the deviation amount with respect to the x-axis direction and the y-axis direction, the sensor element 1 rotates again in the z-axis direction (that is, the base material 2 is twisted), and the central position moves to a point Agr is described. At this time, the middle point M of the initial state of the top surface of the sensor element 1 (the position with respect to a plane of X and Y axes is matched with the original point O of the bottom surface) is moved to the point Mg by the deviation and is moved to the point Mgr by the rotation. However, since the middle point does not move at the time of rotation, the point Mg and the point Mgr are matched with each other. A point at the side of the x-axis direction point Ag from the points Mg and Mgr is a point Mh.

In an example shown in FIG. 10, a rotation angle $\theta$ about the z-axis direction of the top surface of the sensor element 1 is an angle that is formed by a straight line Mg-Ag and a straight line Mg-Agr. The rotation angle $\theta$ is equal to an angle obtained by subtracting an angle $\theta_2$ formed by the straight line Mg-Agr and the straight line Mg-Mh from the angle $\theta_1$ formed by the straight line Mg-Ag and the straight line Mg-Mh. That is, $\theta = \theta_1 - \theta_2$ is realized. With respect to $\theta_1$, if a geometric relationship of a figure shown by a broken line in the drawing is considered, an equation 7 is realized.

(Equation 7)

$$\tan \theta_1 = \frac{y_1}{x_1} \qquad \text{then} \qquad \theta_1 = \tan^{-1} \frac{y_1}{x_1}$$

In this case, the broken line in the drawing shows a state where the electrode of the top surface in the initial state is deviated in the x-axis direction and the y-axis direction and is moved, the middle point M of the four electrodes of the top surface in the initial state and the central position (position shown by A in the drawing) of the electrode A are moved to the points Mg and Ag and a positional relationship between the point Mg and the point Ag is a positional relationship between the middle point M of the initial state and the central position of the electrode A, and $X_1 = \alpha$ and $y_1 = \alpha$ are realized.

In an example shown in FIG. 10, the top surface in the initial state is deviated by $x_0$ in the x-axis direction, is deviated by $y_0$ in the y-axis direction and rotates in the z-axis direction, and the x coordinate of the central point Agr of the electrode A becomes $x_2$ and the y coordinate thereof becomes $y_2$. For this reason, with respect to the angle θ2 that is formed by the straight line Mgr-Agr and the straight line Mgr-Mh, an equation 8 is realized.

(Equation 8)

$$\tan \theta_2 = \frac{y_2 - y_0}{x_2 - x_0} \qquad \text{then} \qquad \theta_2 = \tan^{-1} \frac{y_2 - y_0}{x_2 - x_0}$$

In this case, since the coordinates ($x_A$, $y_A$, and $z_A$) of the central position of the electrode A of the top surface after the displacement are calculated in the process of S2, the position coordinates $x_2$ and $y_2$ are known.

Since the coordinates of the middle position M of the four electrodes of the top surface after the displacement are calculated in the process of S3, the position coordinates $x_0$ and $y_0$ are known.

In addition, the rotation angle calculating unit 14d reads the value of $\alpha$ that is known as a design value of the sensor element 1 and is previously stored in the memory 14m, and calculates the magnitude of the angle $\theta_1$ using the equation 7.

The rotation angle calculating unit 14d reads the coordinates of the central position of each electrode of the top surface stored in the memory 14m in the process of 52 and the coordinates of the middle position M of the four electrodes of the top surface stored in the memory 14m in the process of S3 from the memory 14m, and calculates the magnitude of the angle $\theta_2$ using the equation 8.

The rotation angle calculating unit 14d calculates the rotation angle θ by $\theta = \theta_1 - \theta_2$. Further, the rotation angle calculating unit 14d stores a value of the calculated rotation angle θ in the memory 14m. The rotation angle can be calculated by considering any one of the four electrodes A, B, C, and D of the top surface.

Next, the stress calculating unit 14e calculates the vertical stress and shear stress of the base material of the sensor element, using the middle position M of the four electrodes of the top surface calculated in the process of S3 (S5).

The vertical stress σ is generally calculated by the equation 9.

(Equation 9)   σ = Eε

In this case E indicates longitudinal elastic modulus (Young's modulus) of the base material and ε indicates vertical distortion.

Further, the vertical distortion ε is generally represented by an equation 10.

(Equation 10)   ε = Δd/t

In this case, Δd indicates the compression distance [m] of the base material and t indicates the thickness [m] of the base material.

In this case, the thickness t of the base material in the initial state is known as a design value. Since the coordinates of the middle position M of the four electrodes of the top surface after the displacement in the process of S3, the compression distance Δd of the base material is calculated from the thickness t in the initial state and the z coordinate of the middle position M of the electrodes after the displacement.

Further, the shear stress τ is generally calculated by the equation 11.

$$\text{(Equation 11)} \quad \tau = G\gamma$$

In this case, G indicates a horizontal elastic modulus of the base material and $\gamma$ indicates shear distortion.

Further, the shear distortion $\gamma$ is generally represented by an equation 12.

$$\text{(Equation 12)} \quad \gamma = \Delta\sigma \, / \, t$$

In this case, $\Delta\sigma$ indicates the distance [m] of the top surface of the base material that is deviated in an x-axis direction or a y-axis direction and t indicates the thickness [m] of the base material.

In this case, the thickness t of the base material in the initial state is known as a design value. Since the coordinates of the middle position M of the four electrodes of the top surface after the displacement in the process of S3 is calculated, the distance $\Delta\sigma$ of the top surface of the base material that is deviated in the x-axis direction or the y-axis direction is also known.

On the basis of the above result, the stress calculating unit 14e reads the coordinates of the middle position M of the four electrodes of the top surface stored in the memory 14m in the process of S3 from the memory 14m and calculates the vertical distortion $\varepsilon$ using the equation 10. The stress calculating unit 14e calculates the vertical stress $\sigma$ by the equation 9, using the calculated vertical distortion $\varepsilon$ and longitudinal elastic modulus E. A value of the thickness t of the base material and a value of the longitudinal elastic modulus E are known as design values of the sensor element 1 and are previously stored in the memory 14.

Further, the stress calculating unit 14e reads the coordinates of the middle position M of the four electrodes of the top surface stored in the memory 14m in the process of S3 from the memory 14m and calculates the shear distortion $\gamma$ by the equation 12. The stress calculating unit 14e calculates the shear stress $\tau$ by the equation 11 using the calculated shear distortion $\gamma$ and horizontal elastic modulus G. The value of the horizontal elastic modulus G is known as the design value of the sensor element 1 and is previously stored in the memory 14m.

The shear stress $\tau$ is calculated for each of the x-axis direction and the y-axis direction. At this time, the x coordinate of the coordinates of the middle position M of the four electrodes of the top surface is used when the shear stress in the x-axis direction is calculated, and the y coordinate is used when the shear stress in the y-axis direction is calculated.

Further, the force (that is, vertical load) per area of the base material may be calculated by multiplexing the calculated vertical stress $\sigma$ and a horizontal sectional area (that is, sectional area of the x-y plane) of the base material and the force (that is, horizontal load) per area of the base material may be calculated by multiplexing the calculated shear stress $\tau$ and a vertical sectional area (that is, sectional area of the x-z plane) of the base material.

The stress calculating unit 14e stores values of the calculated vertical stress (and the vertical load per area of the base material) and the shear stress in the x-axis direction and the y-axis direction (and horizontal load per area of the base material) in the memory 14m.

Next, the moment calculating unit 14f calculates the twisting moment of the sensor element using the rotation angle calculated in the process of 54 (S6).

The twisting moment T is generally calculated by an equation 13.

$$\text{(Equation 13)}$$

$$T = \frac{G \, I_p \theta}{t}$$

In this case, G indicates a horizontal elastic modulus of the base material, Ip indicates the cross sectional second polar moment of the base material, $\theta$ indicates a twisting angle, and t indicates the thickness (that is, height) of the base material.

In this case, the cross sectional second polar moment Ip of the base material is calculated as a predetermined value, because a dimension of the base material calculated by the vertical length and the horizontal length of the horizontal section (that is, section of the x-y plane) of the base material is known as a design value.

On the basis of the above result, the moment calculating unit 14f reads a value of the rotation angle $\theta$ stored in the memory 14m in the process of S4 from the memory 14m and calculates the twisting moment T by the equation 13 using the value of the rotation angle θ as an angle θ of a twisting angle. The values of the horizontal elastic modulus G, the cross sectional second polar moment Ip, and the thickness t of the base material are previously stored in the memory 14m.

In addition, the moment calculating unit 14f stores a value of the calculated twisting moment T in the memory 14.

The output unit 14g appropriately outputs data of the values of the vertical stress σ, the shear stress τ, and the twisting moment T stored in the memory 14m to a storage medium, a display device or an external device 15 such as a processing device to further process the data, according to a needed aspect (S7).

According to the capacitive dynamic quantity sensor element 1 according to the present invention that has the above-descried configuration, the capacitive dynamic quantity sensor element 1 has a simple structure and a small size, can detect the various kinds of dynamic quantities, and can be used in a state where the capacitive dynamic quantity sensor element contacts a flexible curve surface. Therefore, the capacitive dynamic quantity sensor element 1 can be used for various applications without restricting usage.

The above-described embodiment is an example of the preferred embodiment of the present invention and the present invention is not limited thereto. That is, various modifications can be made without departing from the gist of the present invention. For example, in this embodiment, the shape of the base material is a shape of a rectangular solid. However, the shape of the base material is not limited to the shape of rectangular solid, and may be a shape that has at least two parallel surfaces facing each other. For example, the base material may have any one of a disc shape, a cylindrical shape, and a drum shape which are partially curved.

In this embodiment, the electrodes 4 are bonded directly to the base material 2. However, when a base material not having an electrical insulating property is used as the base material 2, a plate member that has an electric insulating property may be interposed between the base material and the electrodes.

In this embodiment, the electrodes 4 are disposed such that the central of each electrode is at the vertex of rectangular, but the arrangement of the electrodes 4 is not limited thereto. That is, the electrodes may not be disposed in a rectangular shape, and when the interval of the electrodes 4 is not large and a correlation with the displacement amount is taken, the electrodes may be disposed in a shape of a trapezoid or a parallelogram.

In this embodiment, the four electrodes 4 are disposed on the top surface of the pair of surfaces of the base material 2 and the four electrodes 4 are disposed on the bottom surface thereof. However, the number of electrodes is not limited to 4 and may be smaller than or larger than 4. That is, if at least one electrode 4 is disposed on each surface, a casing that has high rigidity does not need to be provided. Therefore, the sensor element can be formed to have the simple structure and the small size, and a sensor that has flexibility and shows an elastic characteristic according to a measurement object can be configured. If the plural electrodes 4 are disposed on each surface of the pair of surfaces of the base material 2, the capacitance between the electrodes for each combination of the two electrodes selected one by one from the plural electrodes 4 of the surfaces can be output. Therefore, a sensor that can calculate the dynamic quantities such as the deviation in the horizontal direction, the reduction in the vertical direction, the rotational displacement of the vertical axis rotation, the deviation and the twisting with respect to the vertical axis due to the inclination, and the stress corresponding to the displacement by calculation using information of the capacitance between the plural electrodes according to a method of disposing the electrodes 4 can be configured. In particular, if at least three electrodes 4 are disposed on each surface, a sensor that can calculate the dynamic quantities such as the deviation in the horizontal direction, the reduction in the vertical direction, the rotational displacement of the vertical axis rotation, the deviation and the twisting with respect to the vertical axis due to the inclination, and the stress corresponding to the displacement can be configured.

Example 1

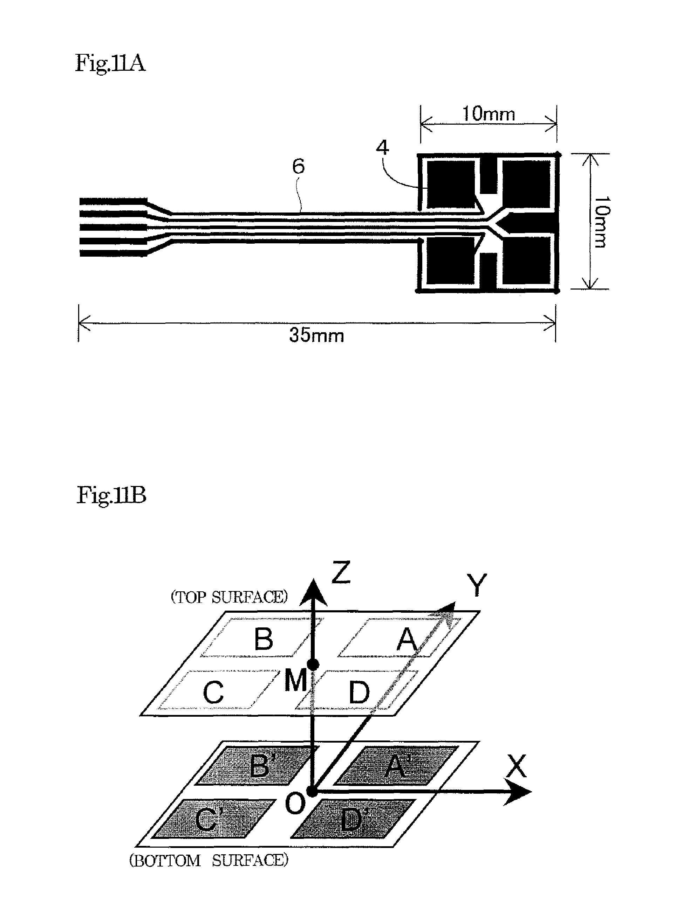

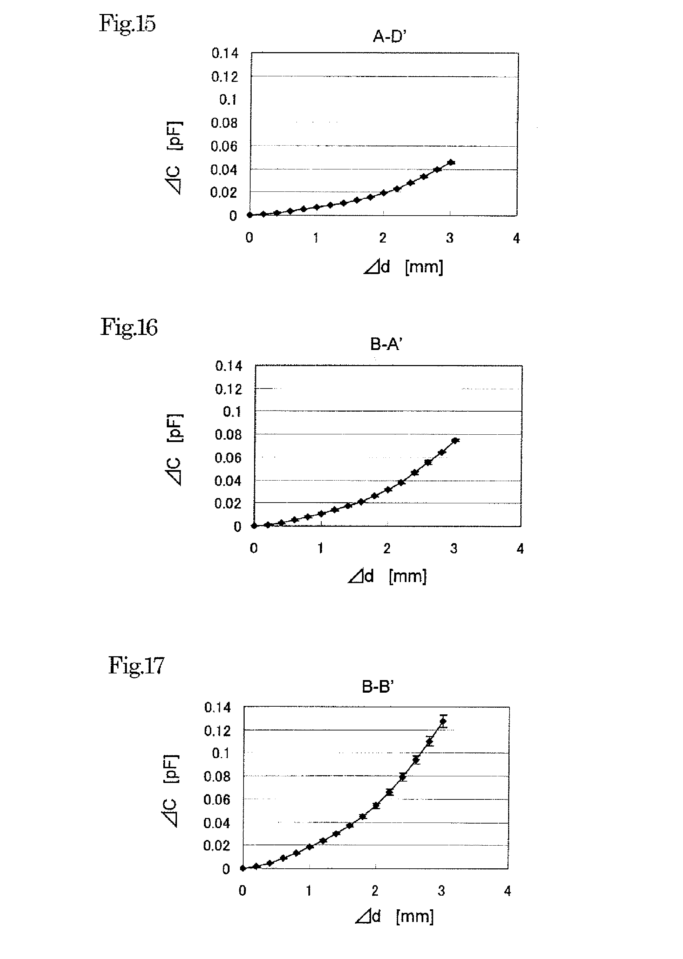

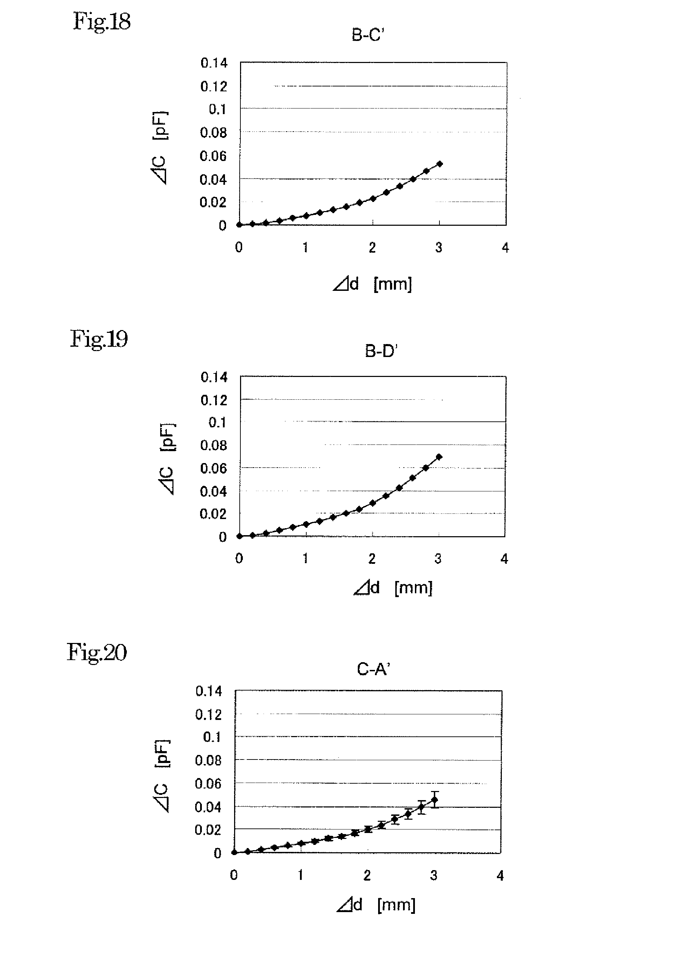

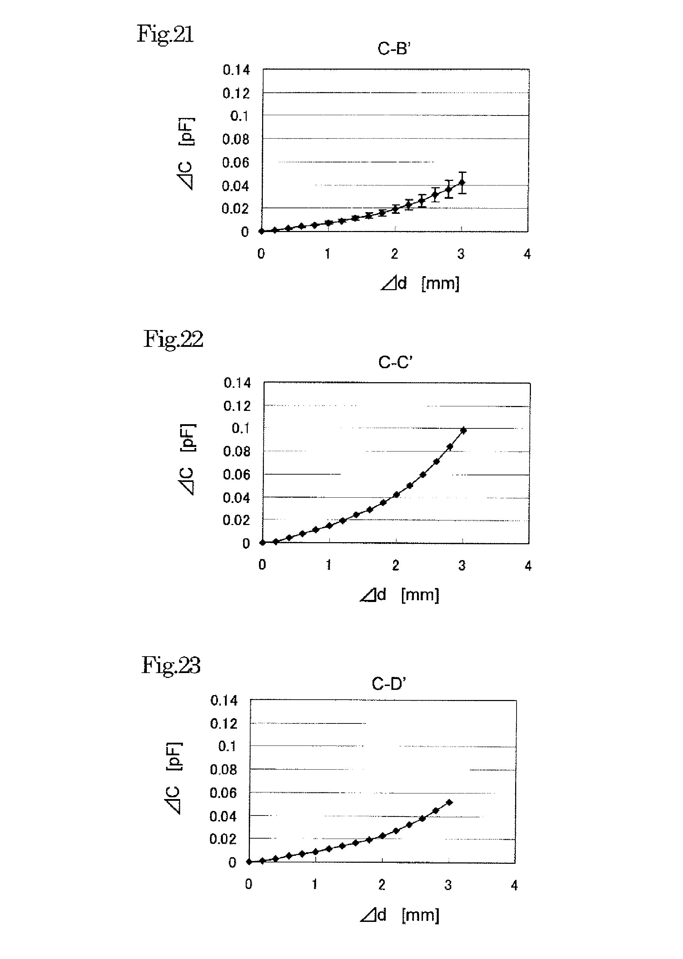

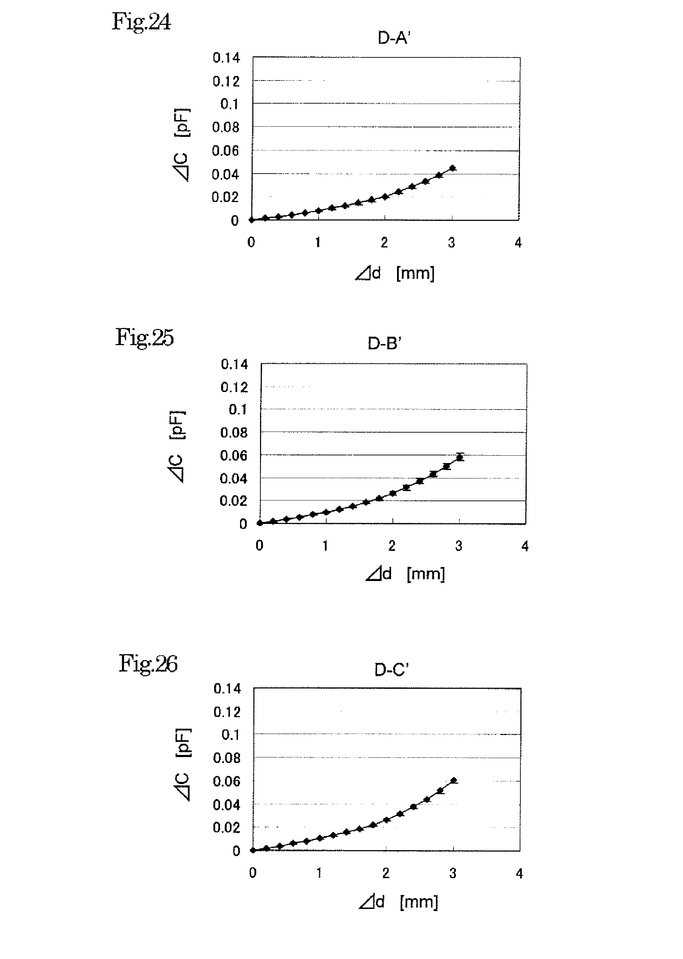

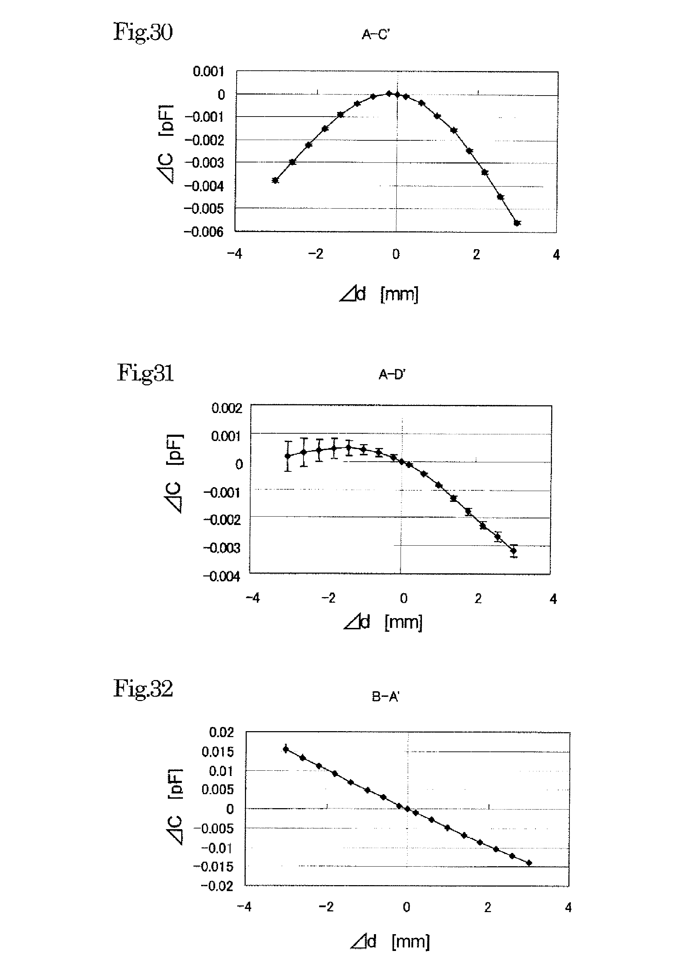

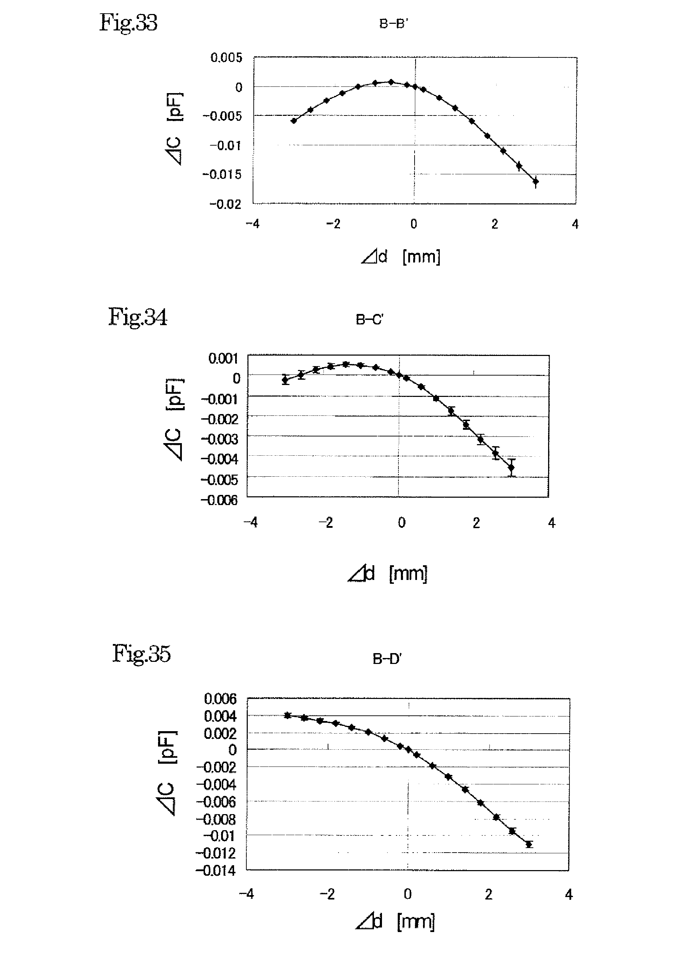

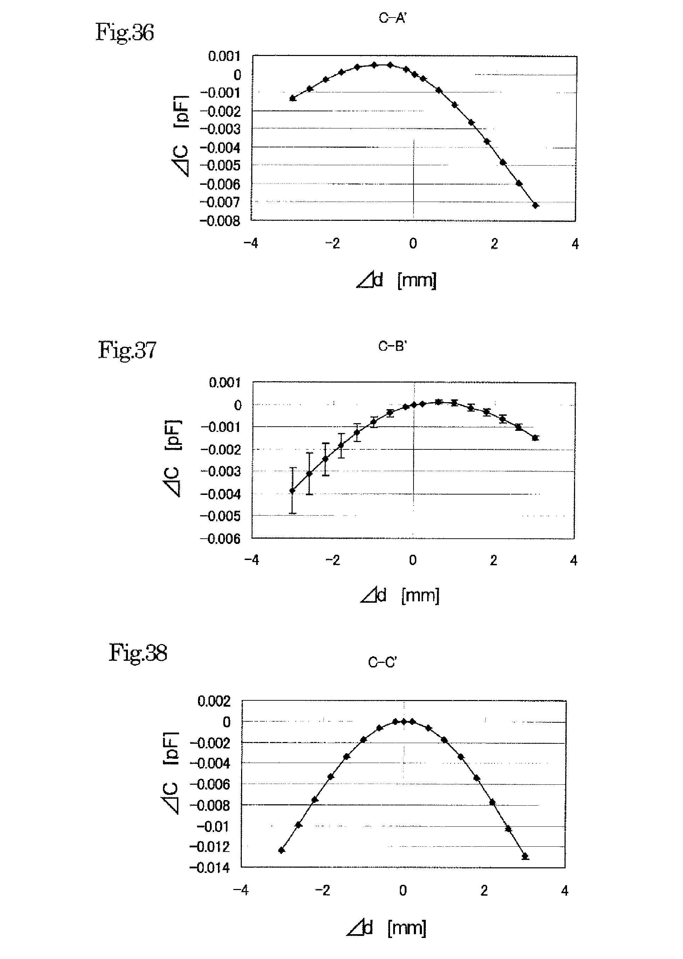

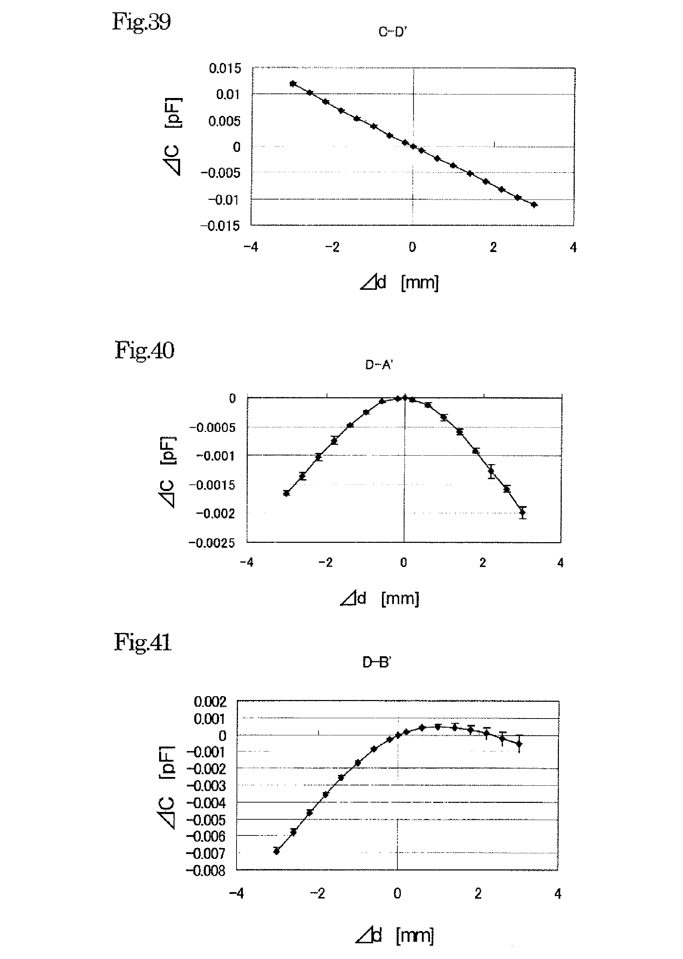

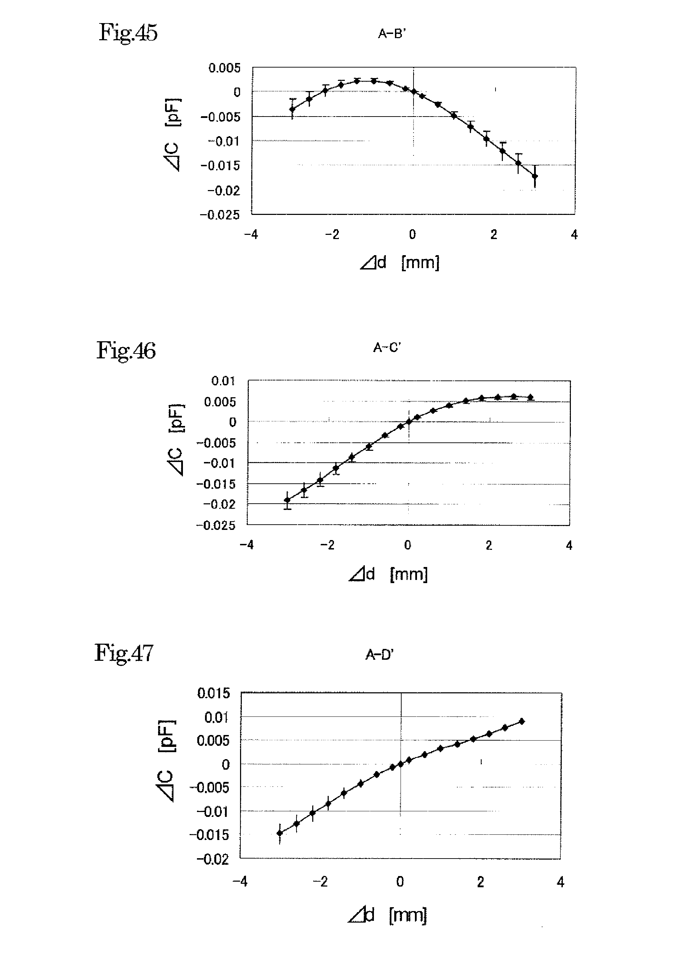

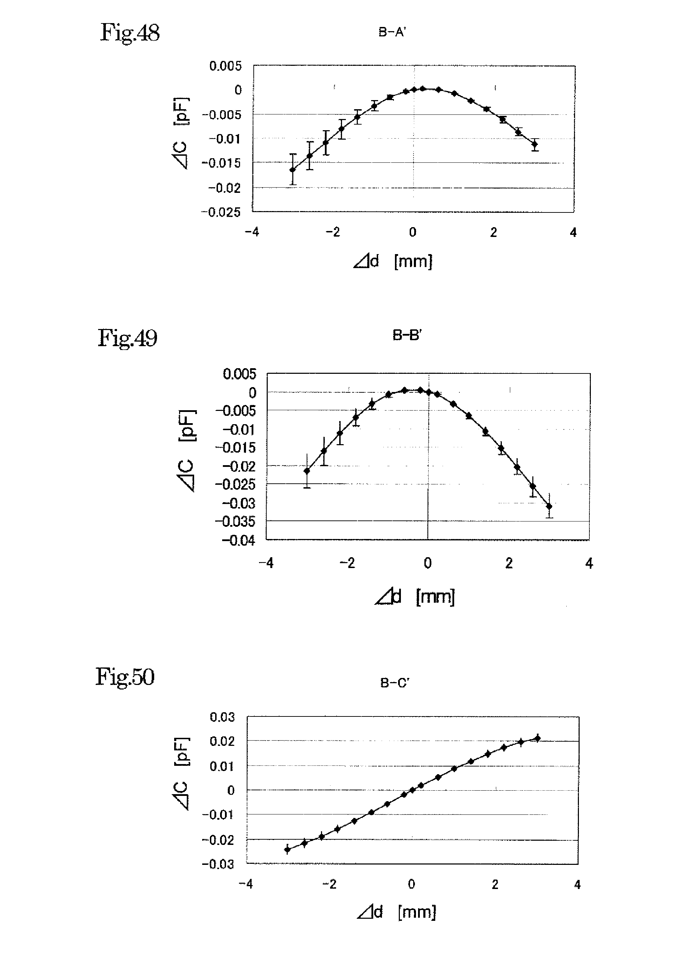

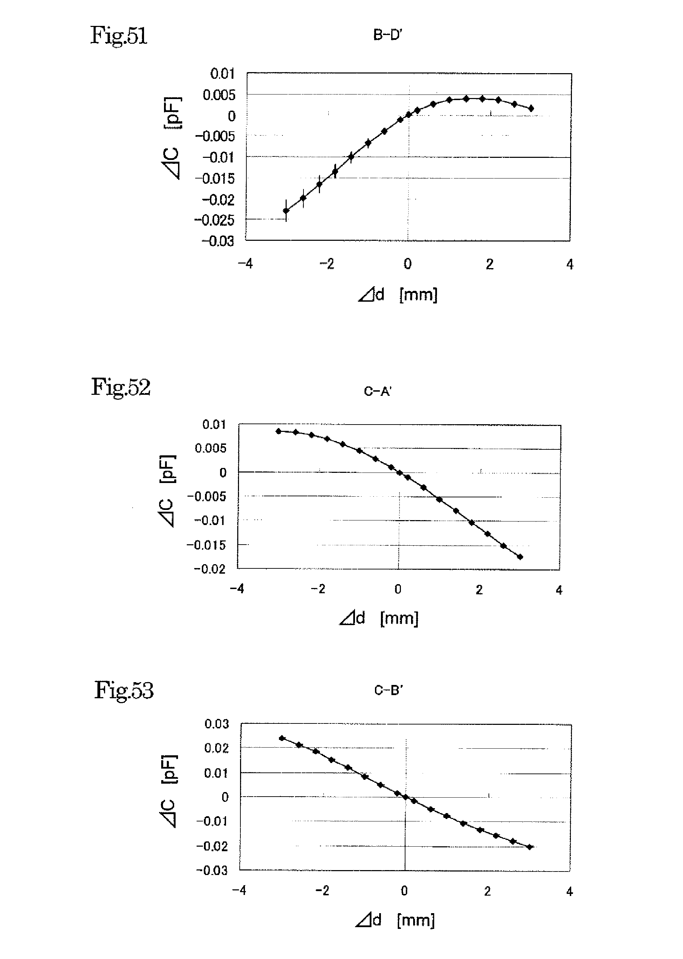

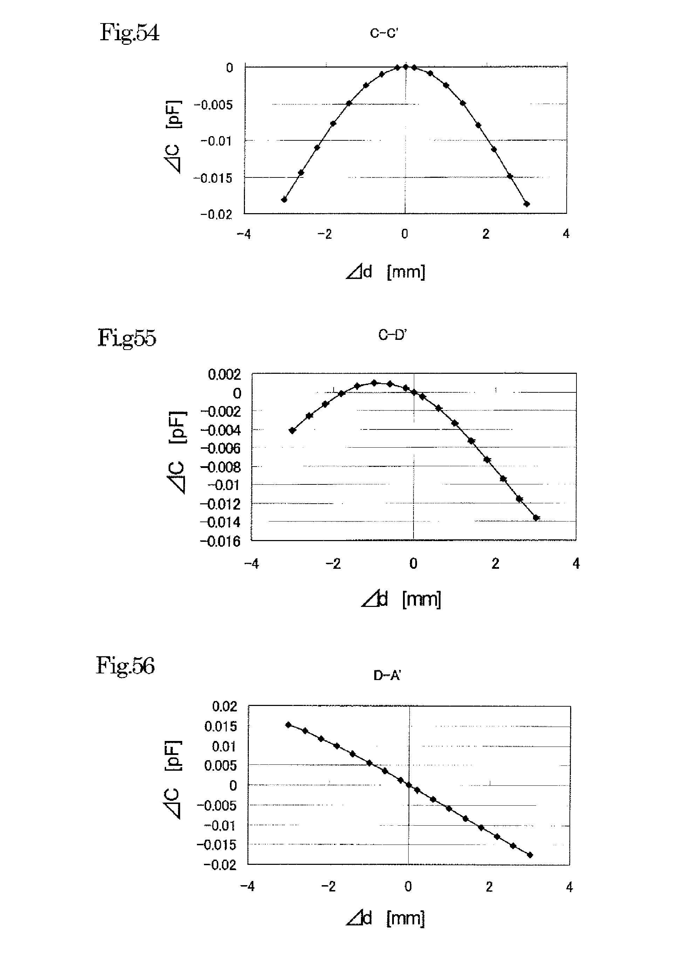

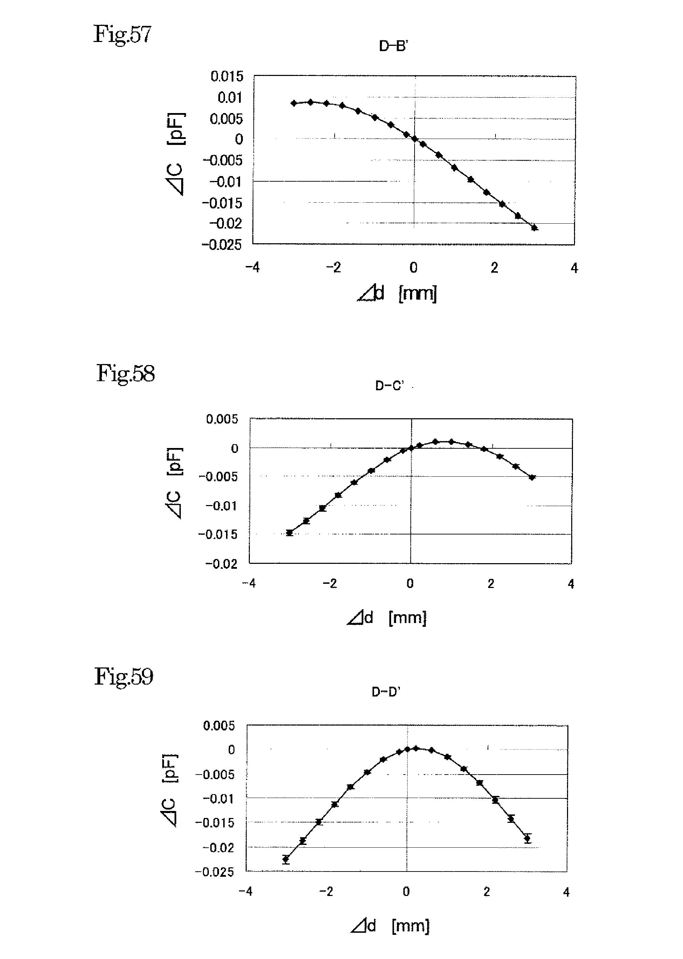

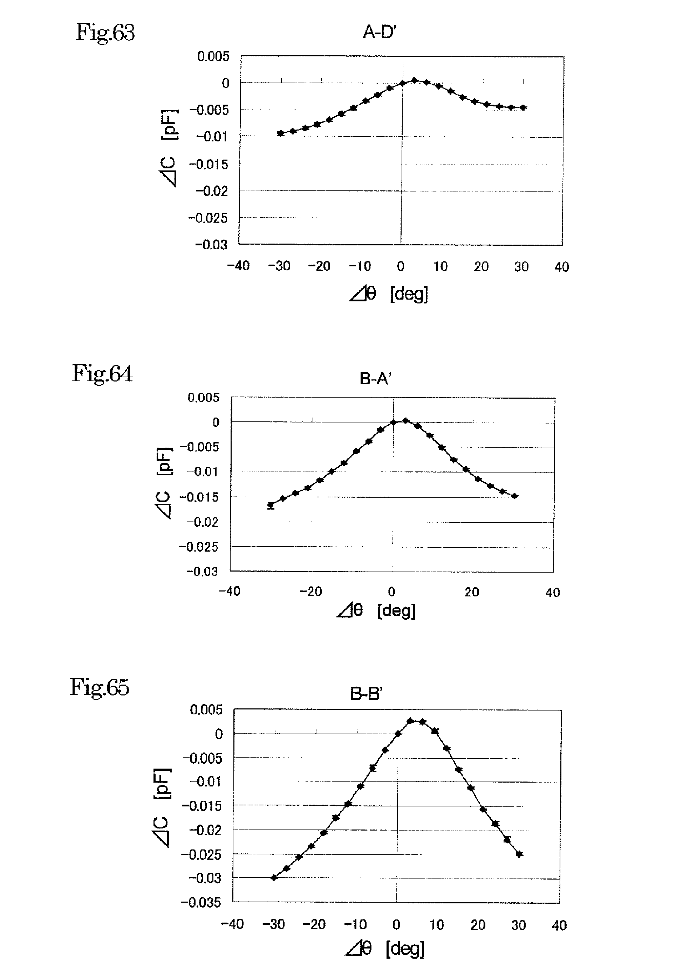

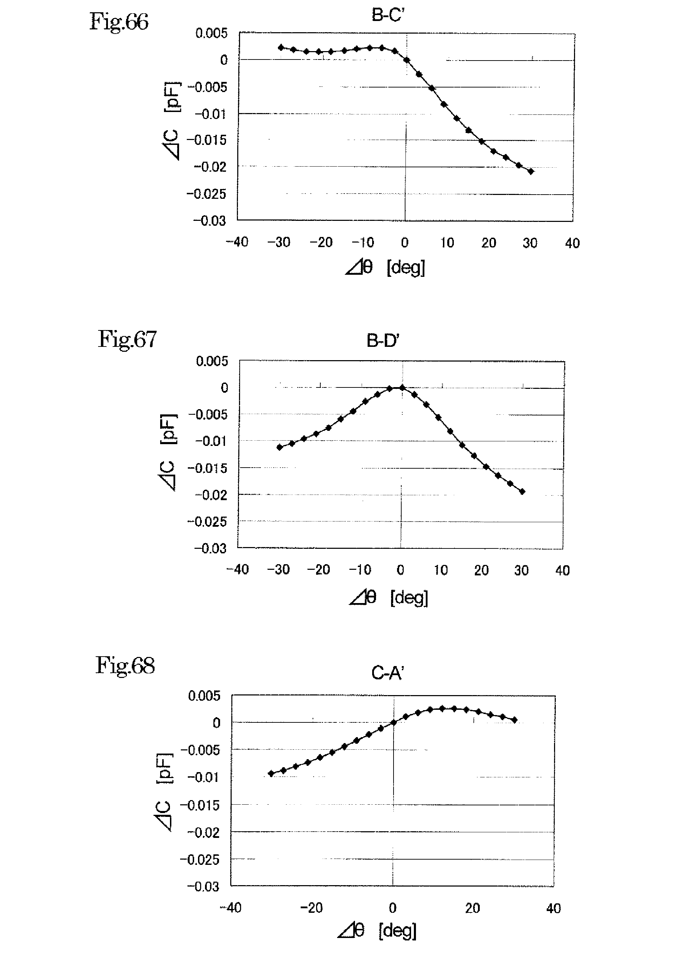

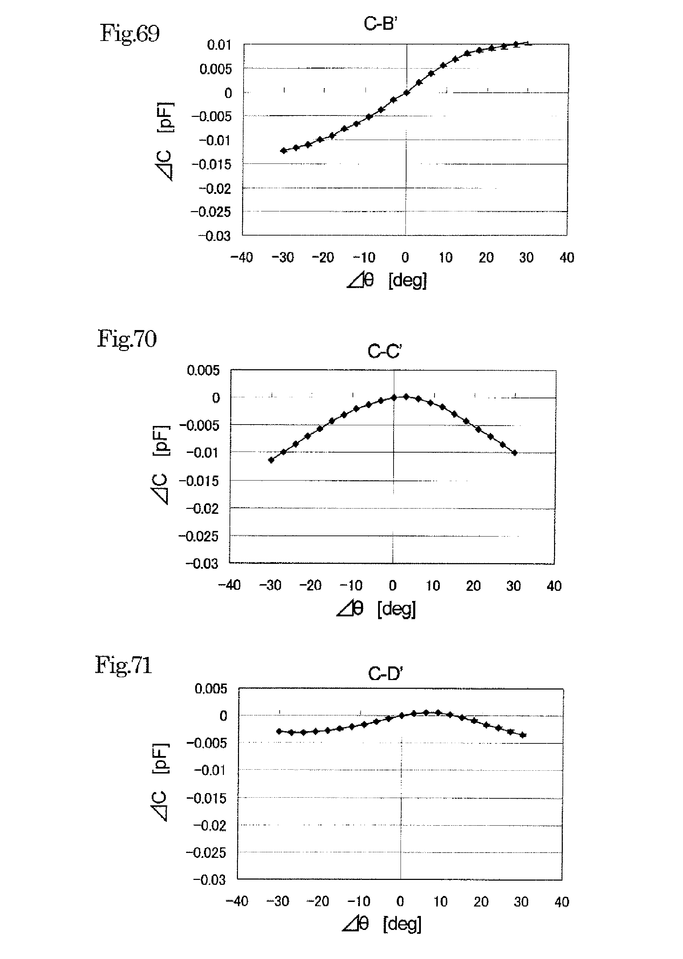

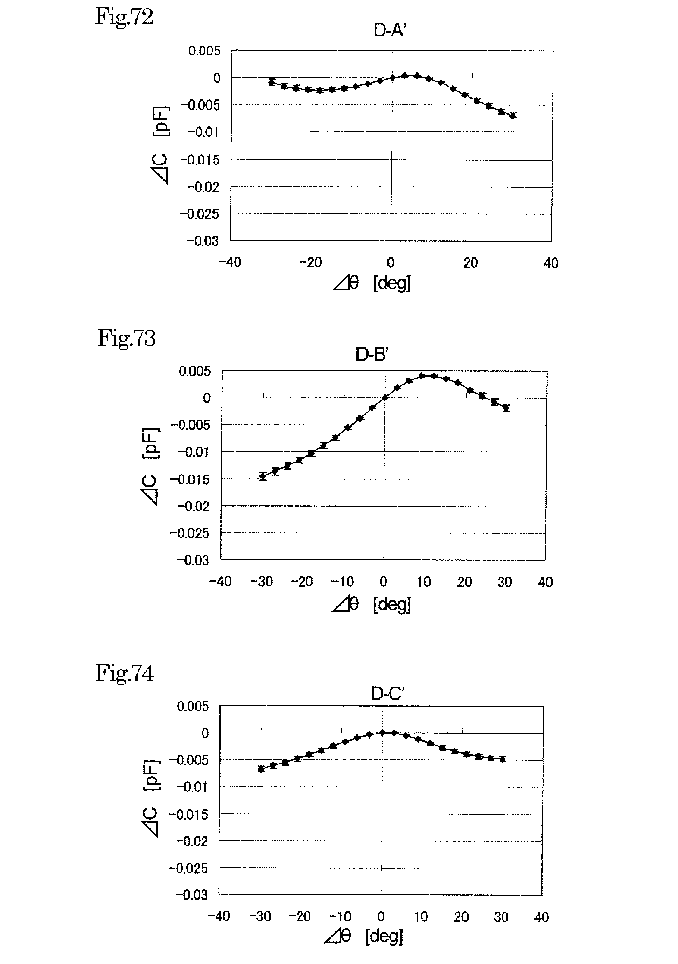

A specific example of the capacitive dynamic quantity sensor element according to the present invention will be described using FIGS. 11 to 78.

In this example, the base material 2 of the rectangular solid of the vertical length: 10 mm x the horizontal length: 10 mm x the height: 5 mm is formed using silicone gel.

In this example, the electrodes are formed by a flexible print board. In this embodiment, one electrode is formed to have a dimension of 3.5 mm. The electrodes 4 that are used in this embodiment are shown in FIG. 11A. FIG. 11B shows arrangement of the electrodes 4 on each surface of the pair of surfaces of the sensor element according to this example, symbols (A, B, C, D, A', B', C', D') to identify the electrodes 4, and setting of three-dimensional axes to represent the position used in the following description. In the following description, the surface on which the electrodes A, B, C, and D are disposed is referred to as a top surface and the surface on which the electrodes A', B', C', and D' are disposed is referred to as a bottom surface. In addition, the middle position of the four electrodes A', B', C' and D' of the bottom surface is set as an original point O, a horizontal axis is set as an X axis and a Y axis, and a vertical axis is set as a Z axis. An arrow direction is set as a positive direction of each axis. The position coordinates that are described herein have a scale of the length and absolute values of the position coordinates are synonymous with the length and the distance.

In this example, the change of the capacitance between the electrodes is measured while the displacement of the compression in the Z-axis direction, the displacement of the deviation in the X and Y-axis directions or the displacement of the rotation about the Z axis, that is, the displacement of twisting is gradually applied to the bottom surface of the sensor element. A range of the displacement of the compression is set to 0 to 3 [mm], a range of the displacement of the deviation is set to - 3 to + 3 [mm], and a range of the rotational displacement of the Z-axis rotation is set to - 30 to + 30 [deg]. In addition, the capacitance is measured for 0.2 mm in the case of the compression, 0.4 mm and the original position in the case of the deviation, and every 3 deg in the case of the rotation. In the measurement in the case where the displacement of the deviation and the displacement of the rotation are applied, the displacement is applied to the bottom surface of the sensor element in a state where the displacement of the compression of 1 mm is applied to the Z-axis direction such that the top surface of the sensor element does not move, and the change of the capacitance is measured. With respect to the Z-axis rotation, the bottom surface of the sensor element is rotated in a clockwise direction.

The capacitance is measured between the total of sixteen pairs of electrodes that are formed by sequentially combining one of the electrodes A, B, C, and D of the top surface and one of the electrodes A', B', C', and D' of the bottom surface.

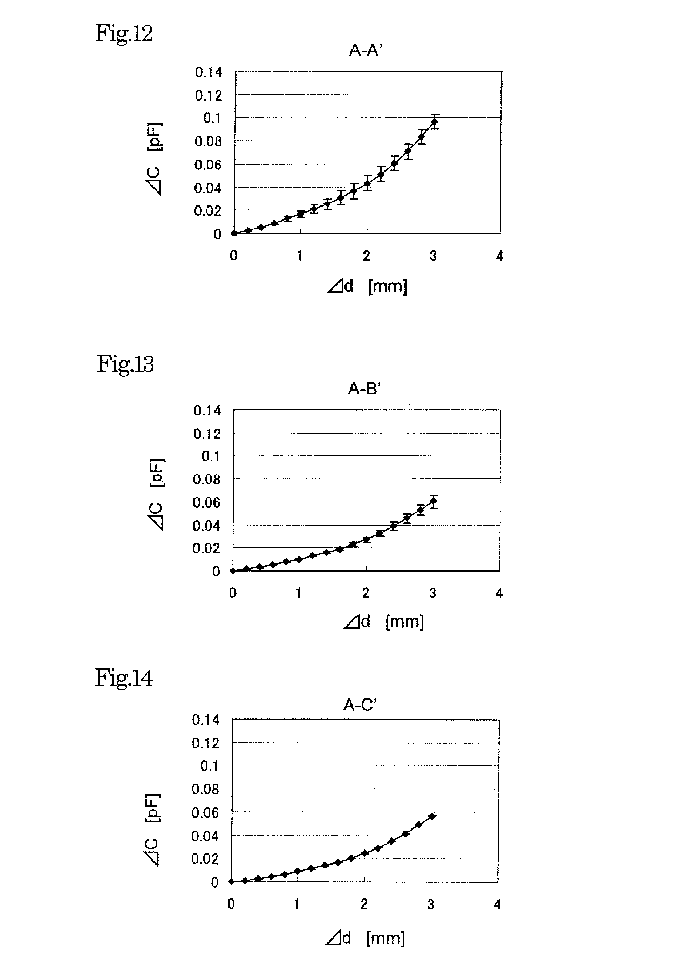

As the measurement result, the difference of the capacitance between the electrodes before the displacement is applied (hereinafter, referred to as an initial state) and the capacitance that is sequentially measured while the displacement is gradually applied, that is, a relationship between the displacement amount and the change amount of the capacitance is arranged. In FIGS. 12 to 75, the displacement amount of the initial state and the change amount of the capacitance are set as zero, that is, an original point, a vertical axis is set as the change amount $\Delta C$ [pF] of the capacitance, a horizontal axis is set as the displacement amount $\Delta d$ [mm] or the rotation angle $\Delta \theta$ [deg], and measurement data is arranged. The measurement is performed three times under the same conditions, and the measurement result is arranged in the drawings to grasp the widths of the measurement values in the three measurements.

The capacitance of when the displacement of the compression in the Z-axis direction until the displacement amount becomes 3 mm from an initial state, that is, a state where the displacement is zero is gradually applied is measured, the difference with the capacitance in the initial state is calculated, and the capacitance difference between the electrodes is shown in FIGS. 12 to 27 as a relationship between the displacement amount $\Delta d$ and the change amount $\Delta C$ of the capacitance.

From the above result, it is confirmed that the capacitance $\Delta C$ increases when the displacement amount $\Delta D$ increases, between all electrodes.

Further, it is confirmed that the change of the capacitance between the electrodes in a positional relationship where the electrodes face each other in a vertical direction in the initial state, such as the electrodes A-A' or the electrodes B-B', is larger than the change of the capacitance between the electrodes in the other positional relationship.

Further, the change of the capacitance between the electrodes in a diagonal positional relationship of a rectangular solid over the Y axis, such as the electrodes A-C' or the electrodes B-D', is larger than the change of the capacitance between the electrodes in a positional relationship not over the Y axis, such as the electrodes A-D' or the electrodes B-C'. This is because the patterns of the electrodes according to this example are symmetrical to the X axis.

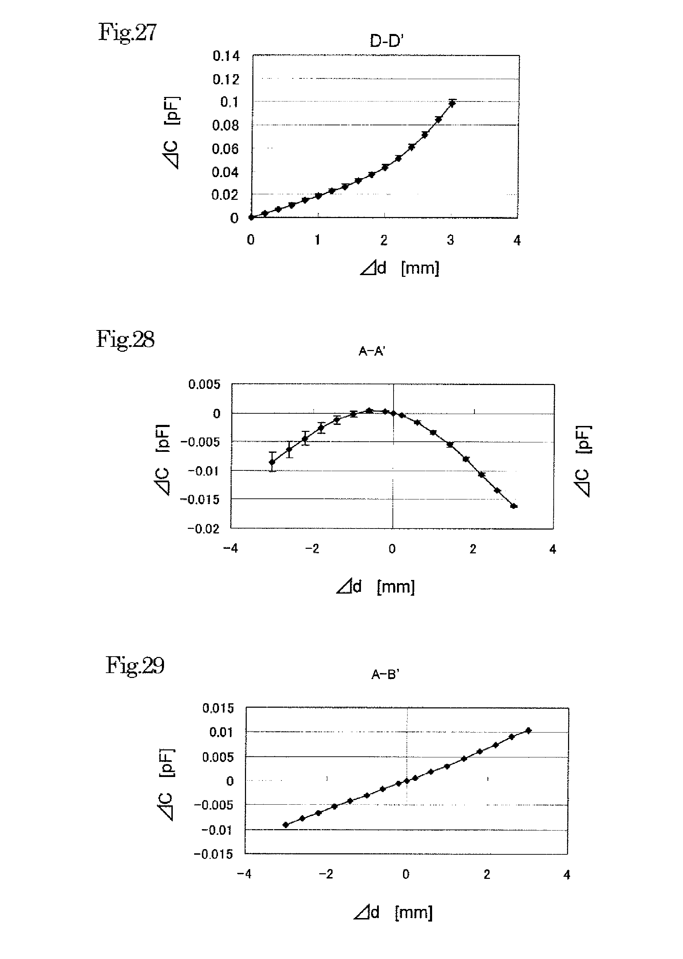

Further, the capacitance of when the displacement of the deviation in the X-axis direction is gradually applied in a range of - 3 to + 3 mm in a state where the compression of 1 mm is performed from an initial state is gradually applied is measured, the difference with the capacitance in the initial state is calculated, and the capacitance difference between the electrodes is shown in FIGS. 28 to 43 as a relationship between the displacement amount $\Delta d$ and the change amount $\Delta C$ of the capacitance.

From the above result, it is confirmed that the capacitance constantly changes when the displacement amount $\Delta d$ changes, between all electrodes.

Further, it is confirmed that a curve line showing the change of the capacitance between the electrodes A-A', B-B', C-C', and D-D' in a positional relationship where the electrodes face each other in a vertical direction in the initial state shows the maximum capacity (that is, peak) at about the displacement amount $\Delta d = 0$, the capacitance decreases according to the increase of the absolute value of the displacement amount, and the curve line becomes an upward convexed curve line to be nearly laterally symmetrical.

In addition, it is confirmed that the change of the capacitance between the electrodes in a positional relationship where the electrodes face each other in a vertical direction in the initial state is larger than the change of the capacitance between the electrodes in the other positional relationships.

Further, it is confirmed that the change of the capacitance between the electrodes A-B', B-A', C-D', and D-C' shows a straight line, because both electrodes are disposed in parallel to each other with respect to the X-axis direction and come close to or are apart from each other with respect to the deviation in the X-axis direction in a range of - 3 to + 3 mm,

Further, it is confirmed that a straight line showing the change of the capacitance between the electrodes A-D', B-C', C-B', and D-A' shows the maximum capacity (that is, peak) at about the displacement amount $\Delta d = 0$, the capacitance decreases according to the increase of the absolute value of the displacement amount and the straight line becomes an upward convexed curve line, similar to the electrodes in the positional relationship where the electrodes face each other in a vertical direction in the initial state.

Further, it is confirmed that the change of the capacitance between the electrodes A-D', B-C', D-A', and C-B' becomes very smaller than the change of the capacitance between the electrodes in a positional relationship where the electrodes face each other in the vertical direction in the initial state or the electrodes A-B', D-C', B-A', and C-D'.

The capacitance between the electrodes A-C', B-D', C-A', and D-B' in a diagonal positional relationship of a rectangular solid increases when the electrodes come close to each other, and the change degree (that is, change ratio) becomes moderate when both electrodes come close to each other. The change amount of the capacitance between the electrodes A-C', B-D', C-A', and D-B' becomes very small.

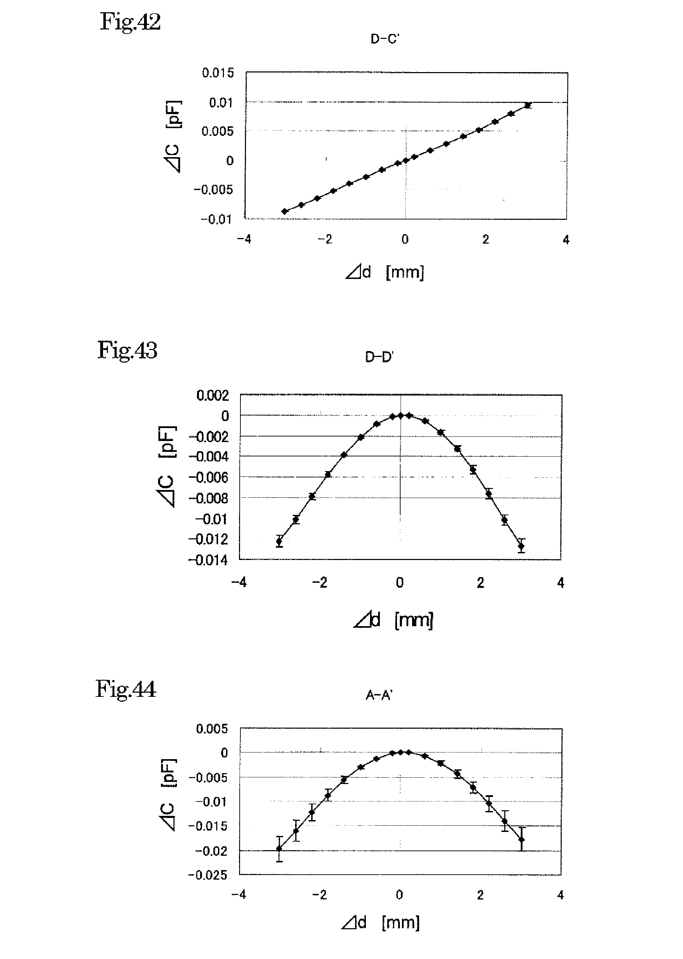

Further, the capacitance of when the displacement of the deviation in the Y-axis direction is gradually applied in a range of - 3 to + 3 mm in a state where the compression of 1 mm is performed from an initial state is gradually applied is measured, the difference with the capacitance in the initial state is calculated, and the capacitance difference between the electrodes is shown in FIGS. 44 to 59 as a relationship between the displacement amount $\Delta$d and the change amount $\Delta$C of the capacitance.

From the above result, it is confirmed that the capacitance constantly changes when the displacement amount $\Delta$d changes, between all electrodes.

Further, it is confirmed that a curve line showing the change of the capacitance between the electrodes A-A', B-B', C-C', and D-D' in a positional relationship where the electrodes face each other in a vertical direction in the initial state shows the maximum capacity (that is, peak) at about the displacement amount $\Delta$d = 0, the capacitance decreases according to the increase of the absolute value of the displacement amount, and the straight line becomes an upward convexed curve line to be nearly laterally symmetrical.

Further, it is confirmed that the change of the capacitance between the electrodes in a positional relationship where the electrodes face each other in a vertical direction in the initial state is larger than the change of the capacitance between the electrodes in the other positional relationships.

Further, it is confirmed that a curve line showing the change of the capacitance between the electrodes A-D', B-C', D-A', and C-B' shows a straight line, because both electrodes are disposed in parallel to each other with respect to the X-axis direction and come close to or are apart from each other with respect to the deviation in the X-axis direction in a range of - 3 to + 3 mm.

Further, it is confirmed that a straight line showing the change of the capacitance between the electrodes A-B', B-A', C-D', and D-C' becomes an convexed curve line according to the change of the displacement, similar to the electrodes in the diagonal positional relationship where the electrodes face each other in a vertical direction in the initial state. In the result of this example, the vertex position of the change curve line where the change amount $\Delta$C of the capacitance becomes the peak is slightly deviated from the position of the displacement amount $\Delta$d = 0.

The capacitance between the electrodes A-C', B-D', C-A', and D-B' in a diagonal positional relationship of a rectangular solid increases when the electrodes come close to each other, and the change degree (that is, change ratio) becomes moderate when both electrodes come close to each other.

The change of the capacitance according to the change of the displacement amount of the deviation in the X-axis direction and the change of the capacitance according to the change of the displacement amount of the deviation in the Y-axis direction are almost matched between the electrodes in a corresponding positional relationship in the X-axis direction and the Y-axis direction, like the electrodes C-D' in the case of the deviation of the X-axis direction and the electrodes C-B' in the case of the deviation of the Y-axis direction.

Meanwhile, the change of the capacitance with respect to the displacement of the case of the deviation in the Y-axis direction is larger than the change of the capacitance in the case of the deviation in the X-axis direction. This is because the patterns of the electrodes used in this example are X-axis objects and a direction of the line 6 is an X-axis direction, and the change of an overlapping area in the case of the displacement in the Y-axis direction is larger than the change of an overlapping area in the case of the displacement in the X-axis direction.

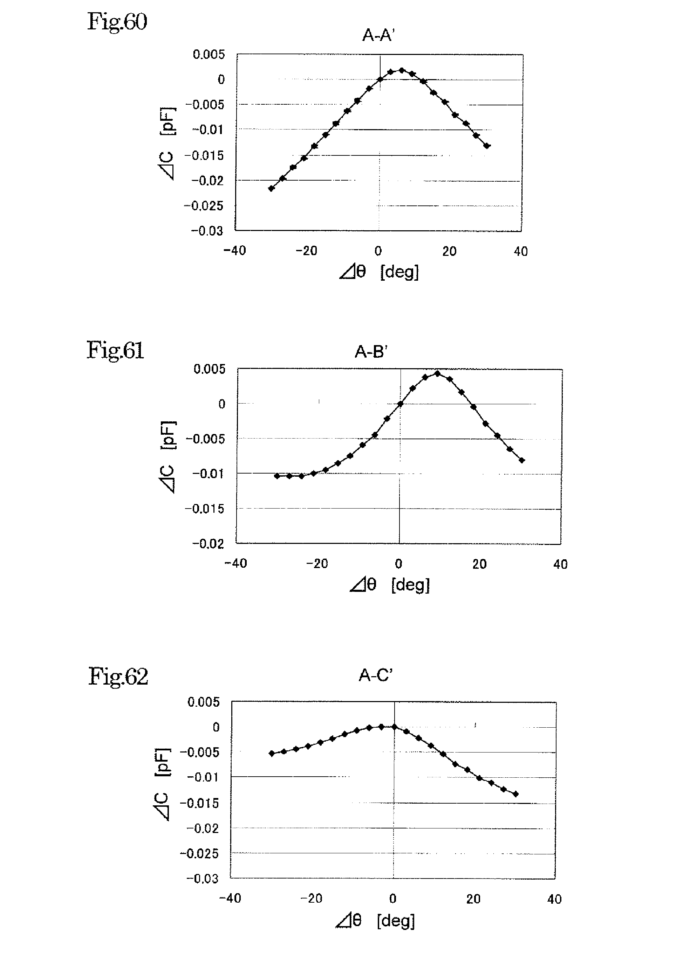

Further, the capacitance of when the rotational displacement of the Z-axis rotation, that is, the displacement of the twisting is gradually applied in a range of - 30 to + 30 deg in a state where the compression of 1 mm is performed from an initial state is measured, the difference with the capacitance in the initial state is calculated, and the capacitance difference between the electrodes is shown in FIGS. 60 to 75 as a relationship between the rotation angle $\Delta\theta$ and the change amount $\Delta$C of the capacitance.

From the above result, it is confirmed that the capacitance constantly changes when the rotation angle $\theta$ changes, between all electrodes.

Further, it is confirmed that a curve line showing the change of the capacitance between the electrodes A-A', B-B', C-C', and D-D' in a positional relationship where the electrodes face each other in a vertical direction in the initial state shows the maximum capacity (that is, peak) at about the initial state (that is, rotation angle $\Delta\theta$ = 0), the capacitance decreases according to the increase of the absolute value of the displacement amount, and the straight line becomes an upward convexed curve line to be nearly laterally symmetrical.

Further, it is confirmed that the change of the capacitance between the electrodes in a positional relationship where the electrodes face each other in a vertical direction in the initial state is larger than the change of the capacitance between the electrodes in the other positional relationships.

In this case, curve lines showing the capacitance between the electrodes A-C', B-D', C-A', and B-B' in a diagonal positional relationship of the rectangular solid are divided into two patterns.

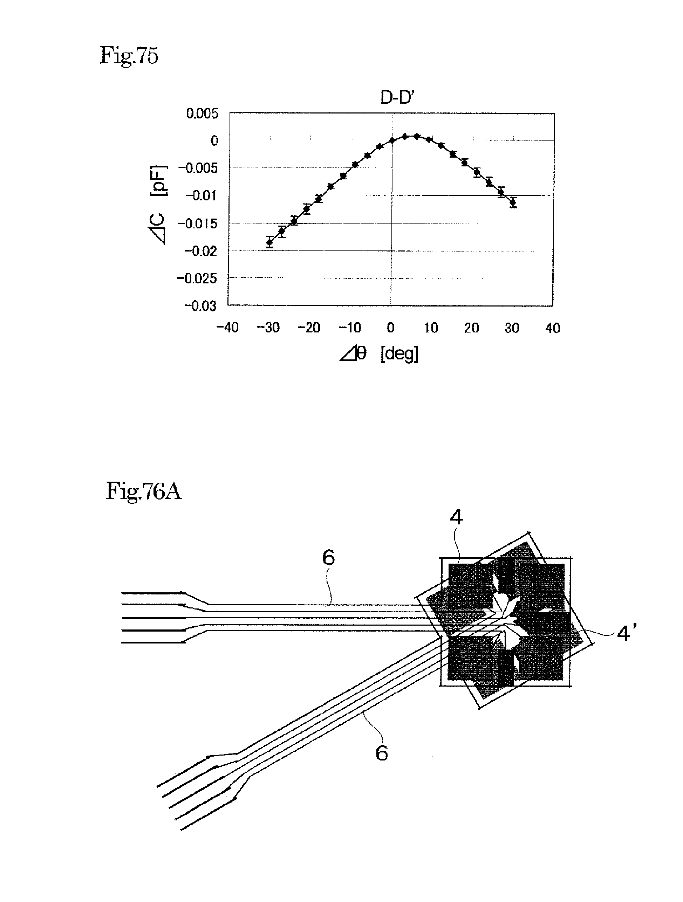

Specifically, one of the two patterns is a pattern where the lines 6 of the electrodes overlap in the case of rotation in a positive direction and the lines 6 of the electrodes are apart from each other in the case of rotation in a negative direction, and corresponds to a pattern between the electrodes C-A' and D-B' in the sensor element according to this example (refer to FIG. 76A).

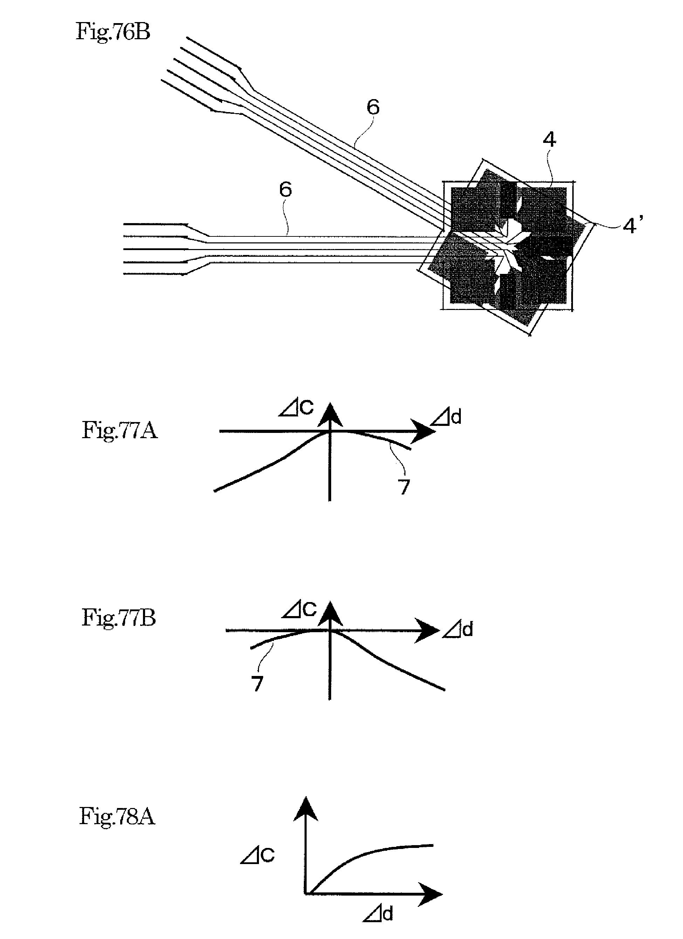

The other pattern is a pattern where the lines 6 of the electrodes are apart from each other in the case of rotation in a positive direction and the lines 6 of the electrodes overlap each other in the case of rotation in a negative direction, and corresponds to a pattern between the electrodes A-C' and B-D' in the sensor element according to this example (refer to FIG. 76B).

Further, the electrodes C-A' and D-B' of the sensor element according to this example show the capacitance change like a curve line shown in FIG. 77A and the electrodes A-C' and B- D' show the capacitance change like a curve line shown in FIG. 77B. The tendency that is shown by a reference numeral 7 in the drawing is generated because portions of the lines 6 are overlapped, an effective area increases, and the capacitance is suppressed from decreasing.

Between the other electrodes, if the movement of the electrode board based on the relative rotational displacement of the top surface and the bottom surface of the sensor element is considered, the following four patterns exist in a positional relationship of the electrodes of the top and bottom surfaces and the lines.

Pattern 1) The electrodes come close to each other and parts of the electrodes overlap each other. Further, the lines that lead from the electrodes overlap each other.

Pattern 2) The electrodes come close to each other and parts of the electrodes overlap each other. Meanwhile, the lines are apart from each other.

Pattern 3) The electrodes are apart from each other. Meanwhile, the lines overlap each other.

Pattern 4) The electrodes are apart from each other. Further, the lines are apart from each other.

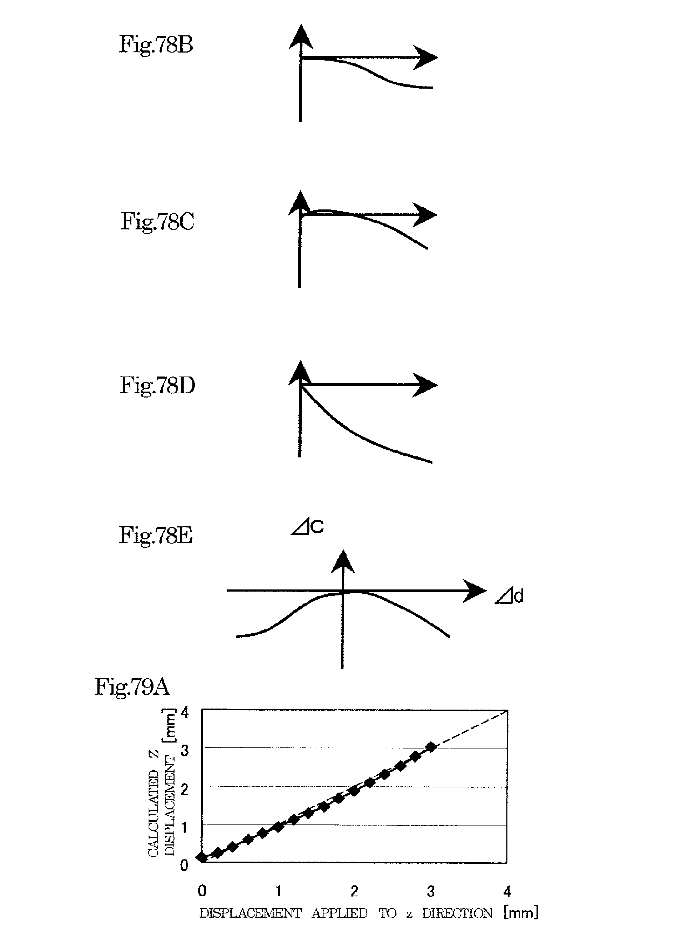

In each of the four patterns, when the rotational displacement of the positive direction is applied, a curve line that shows a relationship between the displacement amount Δd and the capacitance difference ΔC is as shown in FIG. 78. Specifically, the tendencies of the four patterns are arranged as follows.

Pattern 1) The electrodes come close to each other, the lines overlap each other, and the effective area increases. Therefore, the capacitance difference Δd increases according to the increase of the displacement amount Δd (refer to FIG. 78A).

Pattern 2) If the rotation angle increases, the electrodes start to overlap each other, the capacitance increases according to the increase of the area, and the decrease of the capacitance according to the increase of the displacement amount Δd is suppressed, Therefore, after the capacitance difference ΔC decreases, the change degree becomes moderate (refer to FIG. 78B).

Pattern 3) The distance between the electrodes increases, the lines overlap each other, and the capacitance slightly decreases. Therefore, the capacitance difference ΔC slightly decreases as a whole (refer to FIG. 78C).

Pattern 4) The distance between the electrodes increases, the lines are apart from each other, and the capacitance decreases. Therefore, the capacitance difference ΔC greatly decreases as a whole (refer to FIG. 78D).

Specifically, as shown in FIG. 78E, in the case of the electrodes C-D', when the rotation of the positive direction is applied, because the electrodes are apart from each other and the lines overlap each other, the tendency corresponding to the pattern 3 is shown. When the rotation of the negative direction is applied, because the electrodes come close to each other and the lines are apart from each other, the tendency corresponding to the pattern 2 is shown.

From the above result, the lines 6 of the sensor element 1 may greatly affect the measurement result, and it is important to calibrate the capacitance value measured by the sensor element 1 and use the capacitance value.

With respect to the case of the displacement of any kind, the width of the measurement values in the three measurements under the same conditions, that is, the change decreases, the measurement value of the capacitance between the electrodes shows almost the same tendency between the electrodes, and reproducibility of the sensor element is high.

From the entire result of this example, even when any displacement of the deviation in the X-axis direction, the deviation in the Y-axis direction, and the Z-axis rotation is applied, the capacitance between the electrodes changes with the constant tendency, according to the change of the displacement amount or the rotation angle. From this, the kind of the deformation of the base material 2 can be specified using the information of the capacitance between the electrodes by previously calculating a relationship between the change of the capacitance between the electrodes and the displacement amount of each axial direction or the axis rotation, and the dynamic quantities such as the deviation in the horizontal direction, the compression in the vertical direction, the rotational displacement of the vertical axis rotation, the deviation and the twisting with respect to the vertical axis due to the inclination, and the stress corresponding to the displacement can be measured.

Example 2

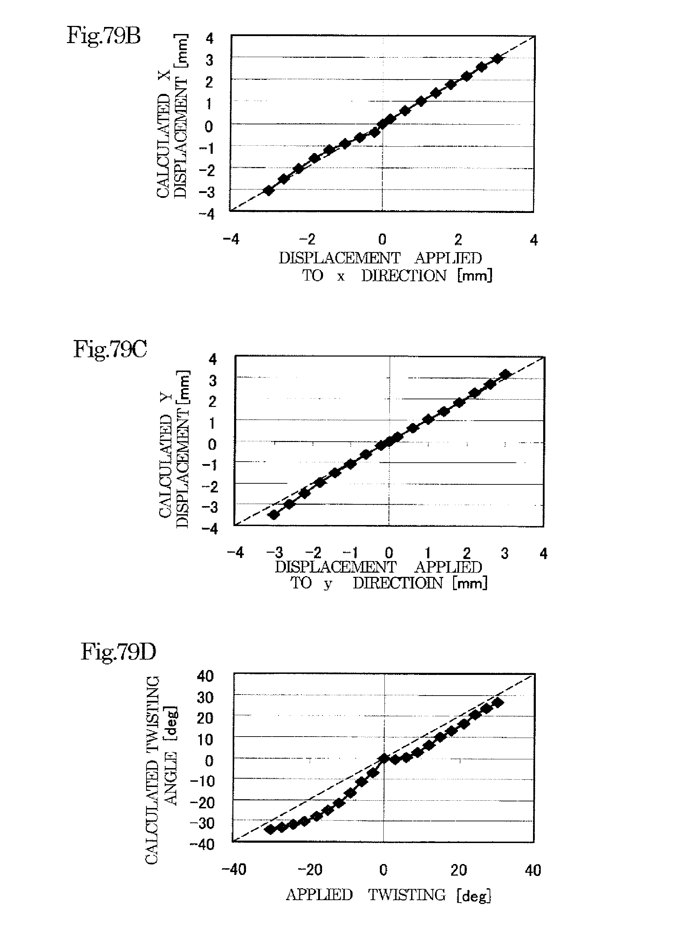

An example of the dynamic quantity sensor according to the present invention will be described using FIG. 79.

As the second example, the capacitance value that is measured by the sensor element is calibrated, the displacement amount of the sensor element is calculated using the calibrated capacitance value, the calculated displacement amount and the actual displacement amount that is applied to the sensor element are compared with each other, and a calibration effect is verified.

In this example, by applying the predetermined displacement to the sensor element to previously measure the capacitance value corresponding to each displacement amount and estimating a linear approximate straight line with the logical value of the capacitance calculated on the basis of the design value or the physical characteristic of the sensor element, $a = 0.9912$ is obtained as the inclination of the calibration equation represented by the equation 1 an $b = 0.0007$ is obtained as the intercept.

In addition, the capacitance that is measured using the same sensor element is calibrated using the calibration equation where the obtained inclination a and intercept b are applied, the various displacement quantities are calculated using the calibrated capacitance value data, and the result shown in FIG. 79 is obtained. An upward sloping broken line that passes the original point in the drawing is a line where a value of a vertical axis and a value of a horizontal axis become equal to each other. When a plot in the drawing becomes close to the corresponding broken line, the calculated displacement amount is approximated to the actual displacement amount and calculation precision is high.

From the result shown in FIG. 79, when the displacement of the compression in the Z-axis direction is applied (refer to FIG. 79A), when the displacement of the deviation in the X-axis direction is applied (refer to FIG. 79B), when the displacement of the deviation in the Y-axis direction is applied (refer to FIG. 79C), and when the rotational displacement of the Z-axis direction, that is, the displacement of the twisting is applied (refer to FIG. 79D), the actual displacement amount is calculated with high precision, and the displacement amount that shows a superior linear relationship with the actual displacement amount can be calculated by using the calibrated measurement value.

From this result, it is confirmed that it is effective to calibrate the measurement value and use the measurement value to calculate the displacement amount in improving calculation precision of the displacement amount.

INDUSTRIAL APPLICABILITY

The capacitive dynamic quantity sensor element and the dynamic quantity sensor according to the present invention are flexible and can detect the various dynamic quantities. Therefore, the capacitive dynamic quantity sensor element and the dynamic quantity sensor are available in a field of measurement of the distribution of the load applied to a human body in a laid state or measurement of the distribution of the pressure of when the flexible surface or the uneven surface contacts the flexible surface.

EXPLANATION OF REFERENCE NUMERALS

1:      capacitive dynamic quantity sensor element

2:      base material
4:      electrode
5:      protective film
6:      line

**Claims**

1.  A capacitive dynamic quantity sensor element, comprising:

> a base material that has an electric insulating property and dynamic elasticity and has at least one pair of facing surfaces;
> at least one electrode that is disposed on one surface of the pair of surfaces of the base material; and
> at least one electrode that is disposed on the other surface of the pair of surfaces,
> wherein capacitance between the electrodes is detected for each combination of the two electrodes selected one by one from the electrode disposed on one surface and the electrode disposed on the other surface.

**2.** A capacitive dynamic quantity sensor element, comprising:

a base material that has an electric insulating property and dynamic elasticity and has at least one pair of facing surfaces;

four electrodes that are disposed on one surface of the pair of surfaces of the base material; and

four electrodes that are disposed on the other surface of the pair of surfaces at positions facing the four electrodes of one surface,

wherein capacitance between the electrodes is detected for each combination of the two electrodes selected one by one from the four electrodes disposed on one surface and the four electrodes disposed on the other surface.

**3.** The capacitive dynamic quantity sensor element of claim 1 or 2,

wherein the electrodes are configured by a flexible print circuit board.

**4.** The capacitive dynamic quantity sensor element of claim 1 or 2,

wherein an entire surface of the capacitive dynamic quantity sensor element is sealed by a protective film.

**5.** A dynamic quantity sensor, comprising:

an operation device,

wherein the operation device includes a means for receiving capacitance value data measured and output by a capacitive dynamic quantity sensor element which includes a base material that has an electric insulating property and dynamic elasticity and has at least one pair of facing surfaces, at least one electrode that is disposed on one surface of the pair of surfaces of the base material, and at least one electrode that is disposed on the other surface of the pair of surfaces, and detects capacitance between the electrodes for each combination of the two electrodes selected one by one from the electrode disposed on one surface and the electrode disposed on the other surface; a means for calculating the position of the electrode disposed on the other surface with respect to the electrode disposed on one surface using the capacitance value data; a means for calculating the middle position of the electrodes disposed on the other surface, on the basis of the position of the electrode disposed on the other surface; a means for calculating a rotation angle of the other surface with respect to one surface, on the basis of the position of the electrode disposed on the other surface; a means for calculating the stress of the base material using the middle position; and a means for calculating the twisting moment of the base material using the rotation angle.

**6.** A dynamic quantity sensor, comprising:

an operation device,

wherein the operation device includes a means for receiving capacitance value data measured and output by a capacitive dynamic quantity sensor element which includes a base material that has an electric insulating property and dynamic elasticity and has at least one pair of facing surfaces, four electrodes that are disposed on one surface of the pair of surfaces of the base material, and four electrodes that are disposed on the other surface of the pair of surfaces at positions facing the four electrodes of one surface, and detects capacitance between the electrodes

for each combination of the two electrodes selected one by one from the four electrodes disposed on one surface and the four electrodes disposed on the other surface; a means for calculating the positions of the four electrodes disposed on the other surface of the pair of surfaces with respect to the four electrodes disposed on one surface of the pair of surfaces using the capacitance value data; a means for calculating the middle position of the four electrodes, on the basis of the positions of the four electrodes; a means for calculating a rotation angle of the other surface with respect to one surface, on the basis of the positions of the four electrodes; a means for calculating the stress of the base material using the middle position of the four electrodes; and a means for calculating the twisting moment of the base material using the rotation angle.

Fig.1

Fig.2

Fig. 3

Fig.4

Fig.5

Fig.6

```
┌──────────────────────────────────────┐
│  INPUT  OF  CAPACITANCE  VALUE  DATA  │
│  ┌ ─ ─ ─ ─ ─ ─ ─ ─ ─ ─ ─ ─ ─ ─ ─ ┐   │ ～S1
│  │        CALIBRATION  OF         │   │
│  │     MEASUREMENT  VALUE         │   │
│  └ ─ ─ ─ ─ ─ ─ ─ ─ ─ ─ ─ ─ ─ ─ ─ ┘   │
└──────────────────────────────────────┘
                    │
                    ▼
┌──────────────────────────────────────┐
│      CALCULATION  OF  CENTRAL         │ ～S2
│    POSITION  OF  EACH  ELECTRODE      │
└──────────────────────────────────────┘
                    │
                    ▼
┌──────────────────────────────────────┐
│     CALCULATION  OF  MIDDLE           │ ～S3
│    POSITION  OF  ELECTRODES           │
└──────────────────────────────────────┘
                    │
                    ▼
┌──────────────────────────────────────┐
│  CALCULATION  OF  ROTATION  ANGLE     │ ～S4
└──────────────────────────────────────┘
                    │
                    ▼
┌──────────────────────────────────────┐
│      CALCULATION  OF  STRESS          │ ～S5
└──────────────────────────────────────┘
                    │
                    ▼
┌──────────────────────────────────────┐
│  CALCULATION  OF  TWISTING  MOMENT    │ ～S6
└──────────────────────────────────────┘
                    │
                    ▼
┌──────────────────────────────────────┐
│       OUTPUT  OF  RESULT              │ ～S7
└──────────────────────────────────────┘
```

Fig.7

Fig.8A

Fig.8B

Fig.9A

Fig.9B

Fig.10

Fig.11A

10mm

4

6

10mm

35mm

Fig.11B

Z

(TOP SURFACE)

Y

B

A

M

C

D

B'

A'

X

O

C'

D'

(BOTTOM SURFACE)

Fig.12

A-A'

Fig.13

A-B'

Fig.14

A-C'

Fig.15

Fig.16

Fig.17

Fig.18

B-C'

Fig.19

B-D'

Fig.20

C-A'

Fig.21

C-B'

Fig.22

C-C'

Fig.23

C-D'

Fig.24

Fig.25

Fig.26

Fig.27

D-D'

Fig.28

A-A'

Fig.29

A-B'

Fig.30

A-C'

Fig31

A-D'

Fig.32

B-A'

Fig.33

B-B'

Fig.34

B-C'

Fig.35

B-D'

Fig.36

C-A'

Fig.37

C-B'

Fig.38

C-C'

Fig.39

C–D'

Fig.40

D–A'

Fig.41

D–B'

Fig.42

D-C'

Fig.43

D-D'

Fig.44

A-A'

Fig.45

A-B'

Fig.46

A-C'

Fig.47

A-D'

Fig.48

B-A'

Fig.49

B-B'

Fig.50

B-C'

Fig.51

B-D'

Fig.52

C-A'

Fig.53

C-B'

Fig.54

C-C'

Fig55

C-D'

Fig.56

D-A'

Fig.57

D-B'

Fig.58

D-C'

Fig.59

D-D'

Fig.60

A-A'

Fig.61

A-B'

Fig.62

A-C'

Fig.63

A-D'

Fig.64

B-A'

Fig.65

B-B'

Fig.66

B-C'

Fig.67

B-D'

Fig.68

C-A'

Fig.69

C-B'

Fig.70

C-C'

Fig.71

C-D'

Fig.72

D-A'

Fig.73

D-B'

Fig.74

D-C'

Fig.75

Fig.76A

Fig.76B

6

4

6

4'

Fig.77A

$\triangle$c

$\triangle$d

7

Fig.77B

$\triangle$c

$\triangle$d

7

Fig.78A

$\triangle$c

$\triangle$d

Fig.78B

Fig.78C

Fig.78D

Fig.78E

Fig.79A

Fig.79B

Fig.79C

Fig.79D

Fig.80

Fig.81A

Fig.81B

**INTERNATIONAL SEARCH REPORT**

| | International application No. |
|---|---|
| | PCT/JP2009/006288 |

A.  CLASSIFICATION OF SUBJECT MATTER
*G01L1/14*(2006.01)i, *G01L5/16*(2006.01)i

According to International Patent Classification (IPC) or to both national classification and IPC

B.  FIELDS SEARCHED

Minimum documentation searched (classification system followed by classification symbols)
G01L1/14, G01L5/16, G01P15/125, G01B7/00-7/34, G01D5/24, G01N27/22

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 63-171334 A  (Peter Seitz), 15 July 1988 (15.07.1988), page 4, upper left column, the last line to page 5, lower left column, line 5; fig. 1 to 6 & US 4836033 A          & EP 264047 A2 & DE 3634855 C1 | 1 |
| X Y | JP 62-226030 A  (Director General, Agency of Industrial Science and Technology), 05 October 1987 (05.10.1987), entire text; all drawings (Family: none) | 1,3-4 2-4 |
| Y | JP 2002-214183 A  (Nihon University), 31 July 2002 (31.07.2002), paragraphs [0004] to [0005]; fig. 10 to 11 (Family: none) | 2-4 |

☒  Further documents are listed in the continuation of Box C.   ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 February, 2010 (05.02.10) | 16 February, 2010 (16.02.10) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

| International application No. |
|---|
| PCT/JP2009/006288 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2006-145488 A  (Mitsubishi Electric Corp.), 08 June 2006 (08.06.2006), paragraphs [0008] to [0033]; fig. 1 to 9 (Family: none) | 2-4 |

Form PCT/ISA/210 (continuation of second sheet) (April 2007)

**EP 2 357 460 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007192587 A